(19) **Europäisches Patentamt**

**European Patent Office**

**Office européen des brevets**

(11) **EP 0 404 523 B1**

(12) **EUROPEAN PATENT SPECIFICATION**

(45) Date of publication and mention
of the grant of the patent:
**15.05.1996 Bulletin 1996/20**

(51) Int Cl.6: **G02B 7/34**

(21) Application number: **90306689.2**

(22) Date of filing: **19.06.1990**

(54) **Automatic focusing device**

Autofocusgerät

Dispositif de mise au point automatique

(84) Designated Contracting States:
**DE FR GB**

(30) Priority: **19.06.1989 JP 156206/89**
**11.09.1989 JP 234997/89**
**11.09.1989 JP 234998/89**
**06.03.1990 JP 54374/90**

(43) Date of publication of application:
**27.12.1990 Bulletin 1990/52**

(73) Proprietor: **NIKON CORPORATION**
**Tokyo (JP)**

(72) Inventors:
• **Kusaka, Yosuke**
**Yokohama-shi, Kanagawa-ken (JP)**

• **Watanabe, Toshimi**
**Tokyo (JP)**
• **Utagawa, Ken**
**Yokohama-shi, Kanagawa-ken (JP)**

(74) Representative: **Burke, Steven David et al**
**R.G.C. Jenkins & Co.**
**26 Caxton Street**
**London SW1H 0RJ (GB)**

(56) References cited:
**GB-A- 2 181 262**

• **PATENT ABSTRACTS OF JAPAN vol. 11, no. 279 (P-614)(2726) September 10, 1987 & JP-A- 62 78 519**
• **PATENT ABSTRACTS OF JAPAN vol. 10, no. 76 (P-440)(2133) March 26, 1986 & JP-A- 60 214 325**

**Description**

BACKGROUND OF THE INVENTION

Field of the Invention

The present invention relates to an automatic focusing device, adapted for use in a camera or the like, and capable of automatic focusing to a moving object.

Related Background Art

For driving a phototaking lens for focusing to a moving object without delay, there is already known a technology called moving object prediction or prediction drive.

As an example, in an automatic focusing device disclosed in the Japanese Laid-Open Patent Appln. No. 60-214325 of the present applicant, the phototaking lens is driven by prediction of future lens position, based on the latest defocus amount and plural defocus amounts in the past obtained from focus detecting means.

However, although such automatic focusing device, for predicting the future lens position based on the latest defocus amount and the plural past defocus amounts, is capable of providing a highly precise prediction and effecting exact lens driving if the lens position varies substantially linearly in time for the moving object, the prediction cannot be conducted properly if the lens position does not vary linearly, so that the lens may show overrun or underrun with respect to the real in-focus position.

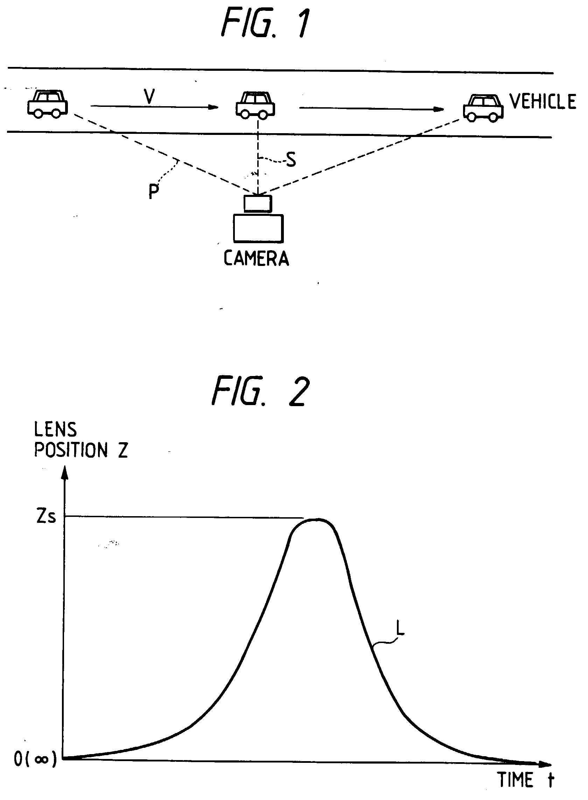

For example, if an automobile moving at a constant speed as shown in Fig. 1 is followed by a camera at a shortest distance S, the focusing lens ideally shows a movement in time indicated by a solid line L in Fig. 2.

Fig. 2 shows the lens position $Z(t)$ in the ordinate, in the amount of lens shifting from a position corresponding to the infinite object distance, as a function of time t in the abscissa, wherein a lens position Zs corresponds to said closest position S.

Fig. 3 shows the result of linear prediction in a conventional device, for the object shown in Fig. 1 providing the lens shift pattern shown in Fig. 2.

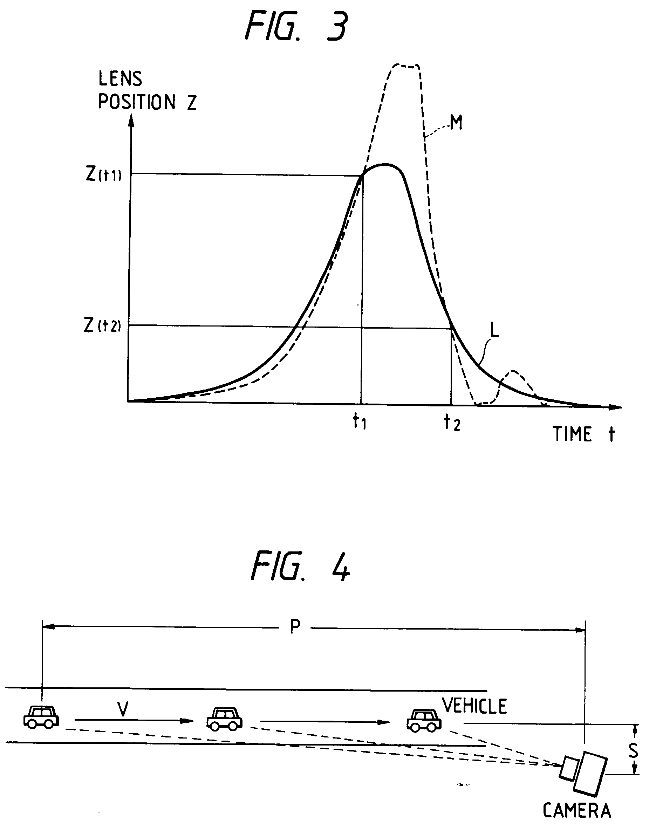

In Fig. 3, a broken line M indicates the lens position as a function of time under control by the conventional technology. As the solid line L indicating the ideal pattern shows rapid change at the lens positions $Z(t1)$ and $Z(t2)$, the prediction based on the past data in the conventional device results in lens overrun.

Particularly when the charge accumulating time of the sensor employed for focus detection becomes long due to the low brightness of the object, or when the exposure operation is inserted between the focus detecting operations, the interval between the detections of defocus amount becomes longer whereby the accuracy of prediction is further deteriorated. Consequently the overrun becomes more conspicuous, and, in the worst case, the focus detection becomes impossible because the amount of movement of the object becomes too large in said interval, whereby the proper lens drive becomes impossible.

The conventional automatic focusing device discriminates whether the object is moving, based on plural defocus amounts obtained in the past from focus detecting means, then predicts the movement of the object in the case of a moving object based on the past plural defocus amounts, and corrects the defocus amount of the focus detecting means so as to follow the movement of the object. Such technology, for example disclosed in the Japanese Laid-Open Patent Appln. No. 63-148218 of the present applicant, allows to maintain the in-focus state even for a moving object.

However, since such conventional technology effects the lens drive based on the past plural defocus amounts, there may result an erroneous lens drive by an error in the detected defocus amount when a man passes in front of the main object or when the main object momentarily goes out of the focus detecting frame, or an overrun of the phototaking lens due to a sudden change in the lens driving direction in case of an object passing by the camera.

SUMMARY OF THE INVENTION

An object of the present invention is to provide an automatic focusing device capable of an accurate focusing operation with respect to a moving object.

The present invention is defined by independent claim 1. The dependent claims 2 to 28 are directed to embodiments of the invention.

The automatic focusing device of the invention stores in advance the lens movement information representing the lens position as a function of time, corresponding for example to the kind of moving object, and controls the focusing lens according to said lens movement information, thereby achieving the lens focusing operation by more accurately following the moving object.

If the geometrical conditions (object distance, speed etc.) of the object movement are known, the locus information indicating the lens position for focusing to the moving object as a function of time can be theoretically calculated. However, as the actual object does not necessarily move exactly according to such conditions, there may result a focus error even if the focusing lens is driven according to the thus calculated locus information.

As an example, when an automobile linearly moves toward a camera, as shown in Fig. 4, with a constant speed V and a shortest distance S to the camera, the locus Z of lens position from the initial distance P can be presented as follows:

$$Z = (D/2\text{-}f) - \sqrt{(D/2\text{-}f)^2 - f^2}$$

wherein

$$D = \sqrt{(P\text{-}V \times t)^2 + S^2} \tag{1}$$

In the equation (1), f is the focal length of the phototaking lens, t is the time, and the lens position Z is derived, from known lens equations for a single lens, taking the lens position focus to the infinite distance as zero.

However, if the actual object has a closest distance Sr and a speed Vr, there will result an error between the lens locus Z obtained from the equation (1) and the actual locus Zr obtained by putting Sr, Zr into the equation (1), and the obtained image becomes out of focus if said error is large.

Therefore, in accordance with preferred embodiments of the invention, a lens drive control means is adapted to control the lens position in such a manner that the position of a phototaking lens coincides with a stored lens movement pattern information, and corrects the lens position at each generation of an in-focus lens position. More specifically, in one embodiment, the control means controls the lens in such a manner that the actual lens position coincides with the lens movement pattern information having the initially obtained in-focus lens position as the initial position, by reading said information with the lapse of time, and, when a new in-focus lens position is obtained in the course of said control, correcting the lens position to lens movement pattern information matching said in-focus lens position, and re-starting the reading of the lens movement pattern information from the thus corrected position.

Also, the lens drive control means may be provided with start means for instructing the start of control following the lens movement pattern information, thereby starting the lens drive according to the lens movement pattern information, when predetermined photographing conditions are obtained.

The error between the lens position according to the lens movement pattern information and the in-focus lens position corresponding to the actual object movement may be minimized by correcting the error in succession using intermittently generated in-focus lens positions of the moving object.

Another embodiment of the present invention provides an automatic focusing device capable of minimizing the error in a focusing locus relative to the object movement, thereby enabling constant focusing on the film plane.

In this embodiment, the locus correcting means may be adapted to generate corrected locus information by correcting the locus information with proportional enlargement and parallel displacement of the lens position and time. The locus correcting means may also be adapted to generate the corrected locus information by correcting the locus information so as to reduce the error with respect to the in-focus lens positions of a predetermined past time or of a predetermined number in the past.

The automatic focusing device of this embodiment stores in advance the locus of in-focus lens positions for a particular moving object as locus information representing the lens position as a function of time, corrects said locus information so as to reduce the error between plural in-focus lens positions obtained by intermittently detecting the actual movement of the object, and controls the phototaking lens based on the thus corrected locus information, whereby highly precise focusing control is possible with the exact locus information of minimized error.

The automatic focusing device may be provided with mode selection means for selecting either an operation mode for storing plural sets of in-focus lens positions and times generated time-sequentially in respective plural in-focus position memory means, or an operation mode for controlling said phototaking lens by said lens drive control means according to the locus information.

There may also be provided memory selection means for selecting one of said plural in-focus position memory means and causing display means to display the content thereof.

Such an automatic focusing device measures the in-focus position and time by direct focus detection of the actual object movement, and generates the locus information of the phototaking lens for the particular moving object by statistical processing of plural data obtained by executing the above-mentioned measurement plural times, whereby more exact locus information can be obtained.

## BRIEF DESCRIPTION OF THE DRAWINGS

Fig. 1 is a schematic view of photographing a moving object;
Fig. 2 is a chart showing lens movement pattern information;
Fig. 3 is a chart showing a conventional tracing operation;

Fig. 4 is a schematic view showing an example of photographing situation;

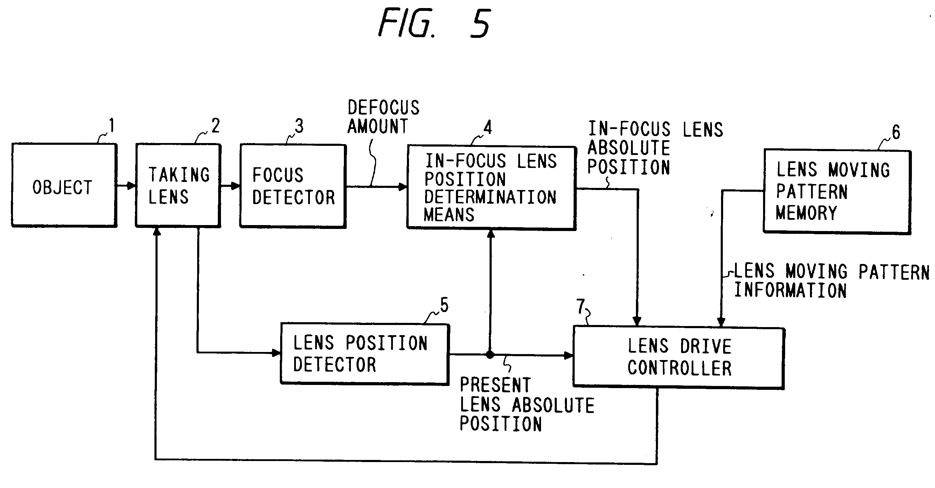

Fig. 5 is a block diagram of a first embodiment of the automatic focusing device of the present invention;

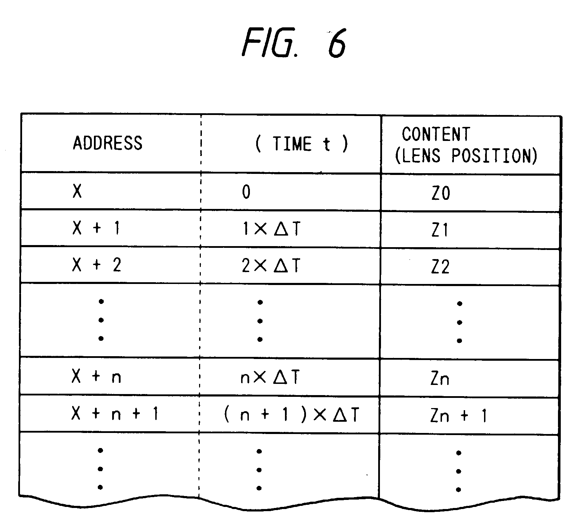

Fig. 6 is a schematic view showing a format of storing lens movement pattern.

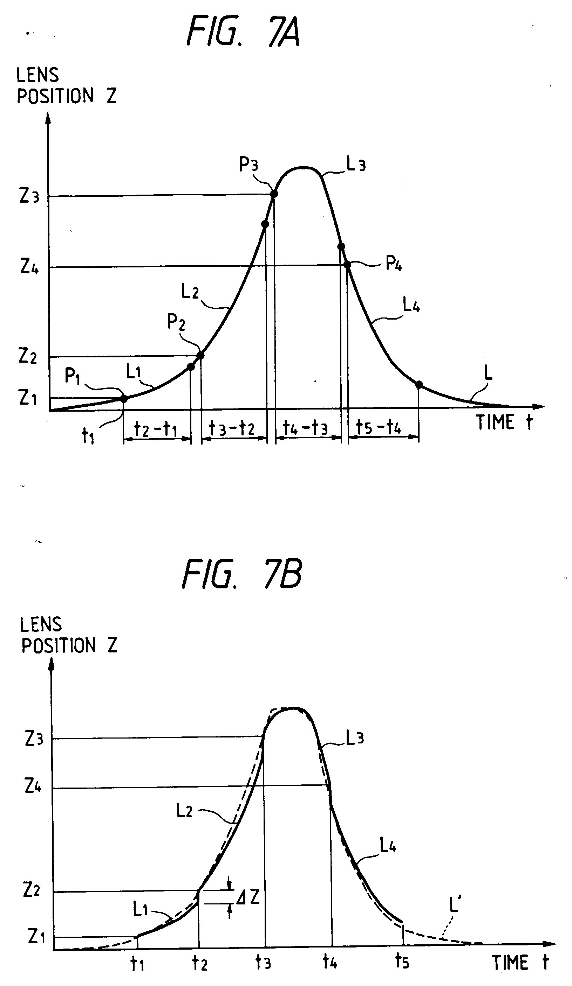

Figs. 7A, 7B, 8A, 8B and 9 are charts showing the function of lens movement control means;

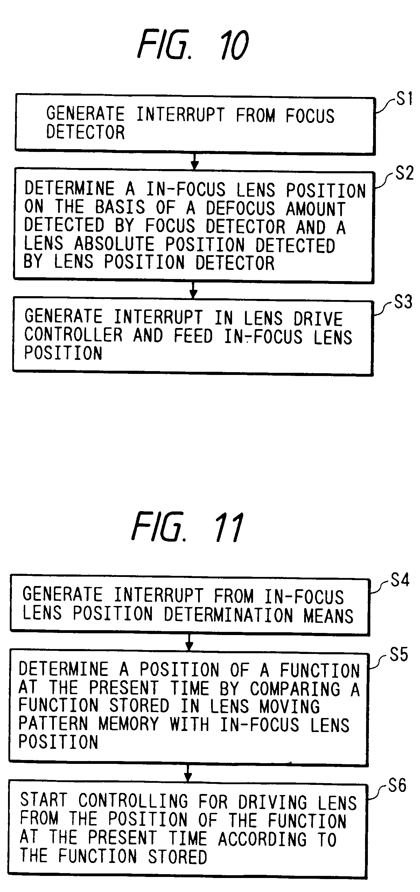

Fig. 10 is a flow chart showing the operation sequence of in-focus lens position determining means;

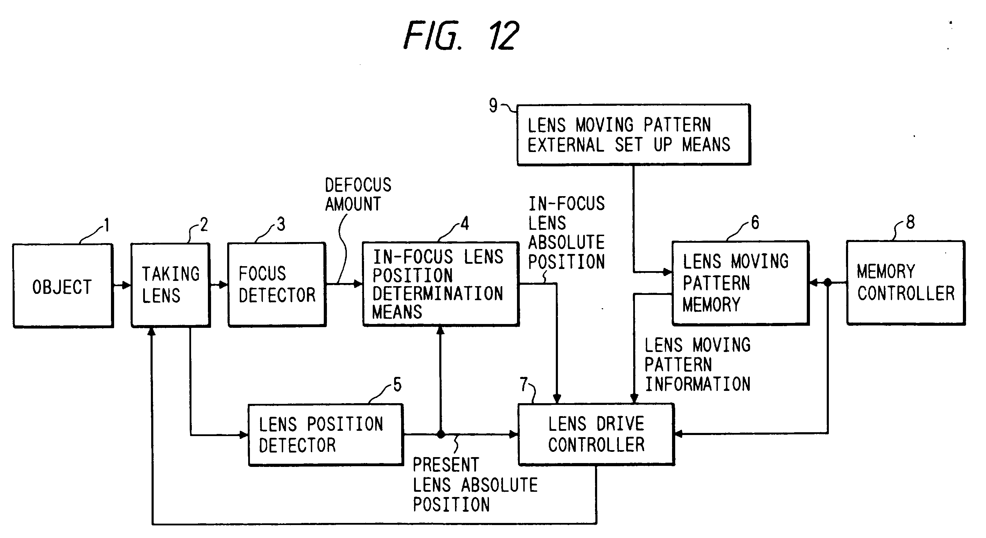

Fig. 11 is a flow chart showing the operation sequence of lens drive control means;

Fig. 12 is a block diagram of a second embodiment of the automatic focusing device of the present invention;

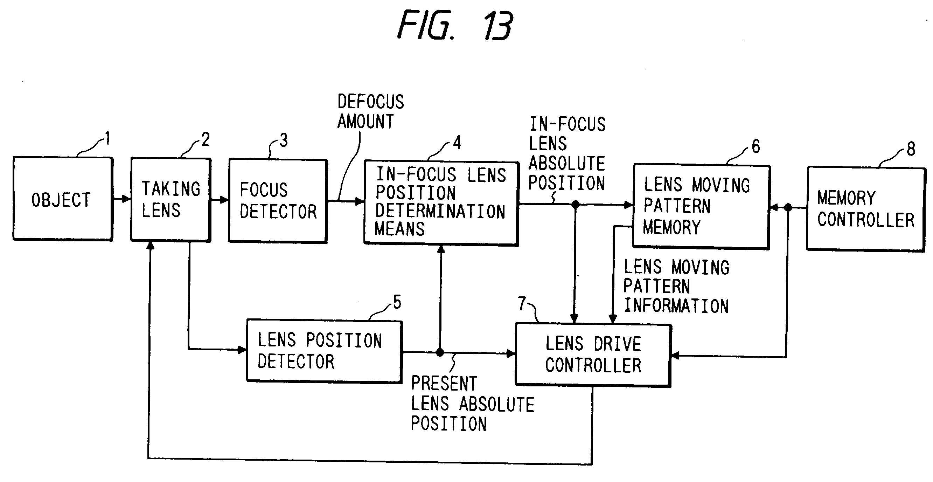

Fig. 13 is a block diagram of a third embodiment of the automatic focusing device of the present invention;

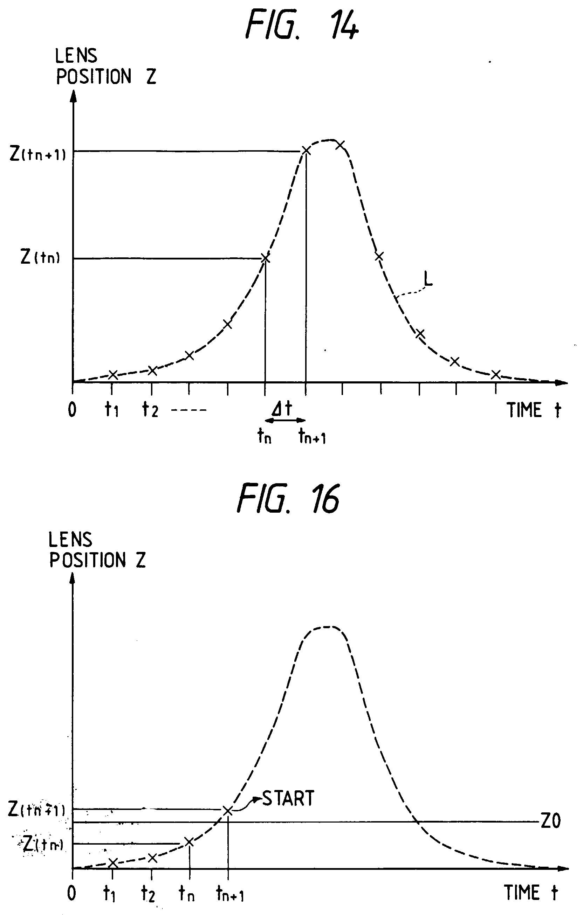

Fig. 14 is a chart of lens movement pattern information;

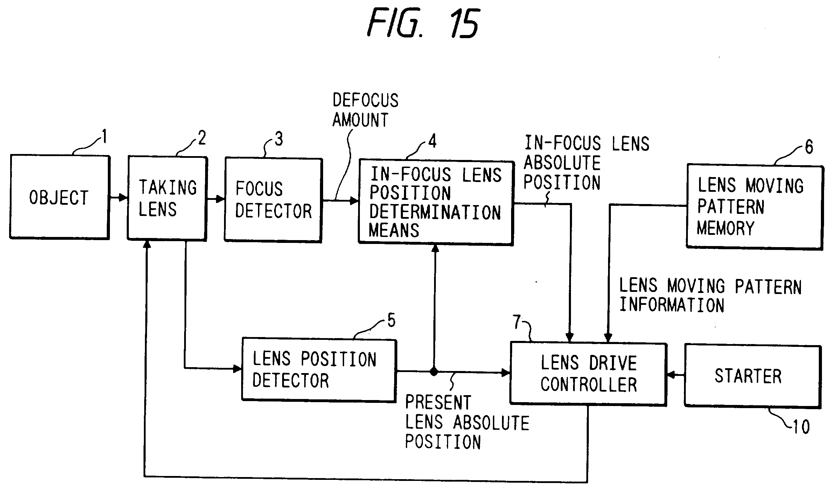

Fig. 15 is a block diagram of a fourth embodiment of the automatic focusing device of the present invention;

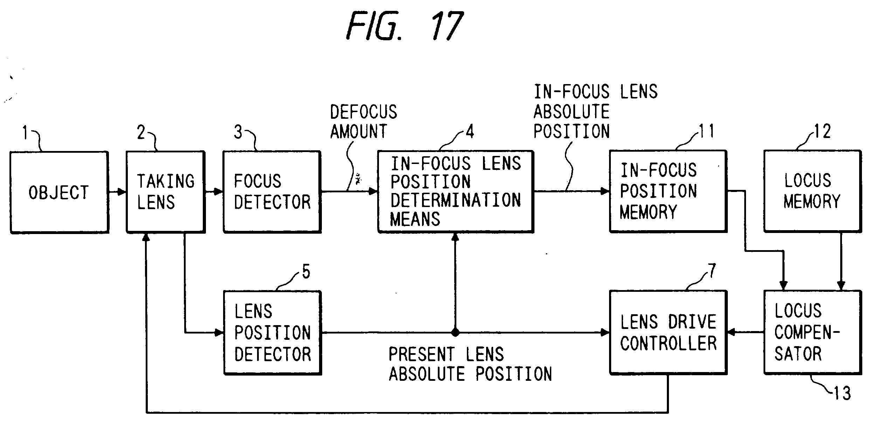

Fig. 16 is a chart showing the function of starting means;

Fig. 17 is a block diagram of a fifth embodiment of the automatic focusing device of the present invention;

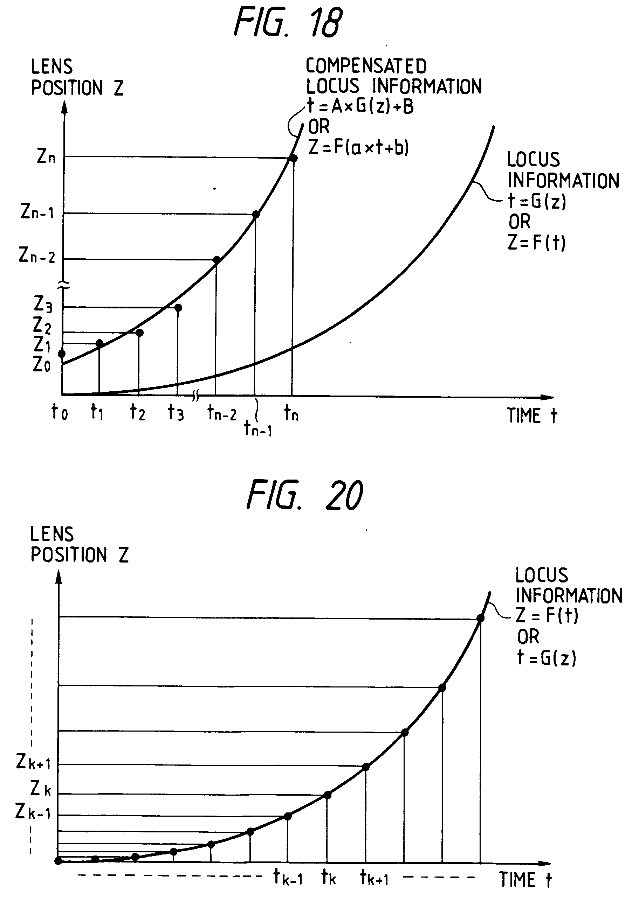

Fig. 18 is a chart showing locus information and compensated locus information representing lens position as a function of time;

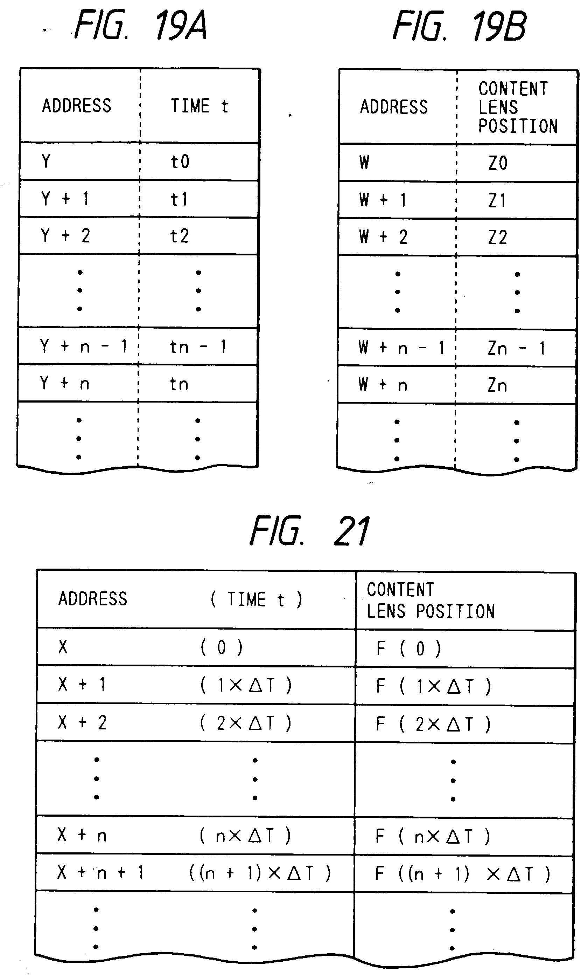

Figs. 19A and 19B are charts showing the process in the in-focus position memory means;

Fig. 20 is a chart showing the information stored in the locus memory means;

Figs. 21, 22, 23A and 23B are charts showing the process in the locus memory means;

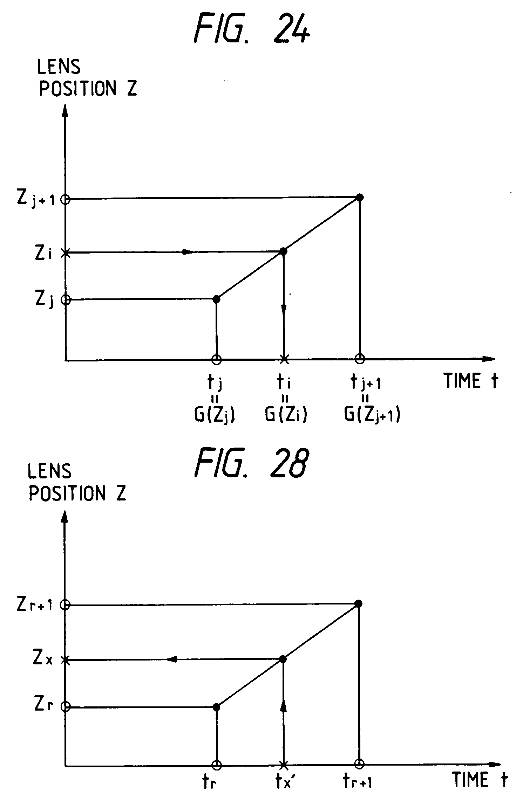

Fig. 24 is a chart showing the process in the locus compensating means;

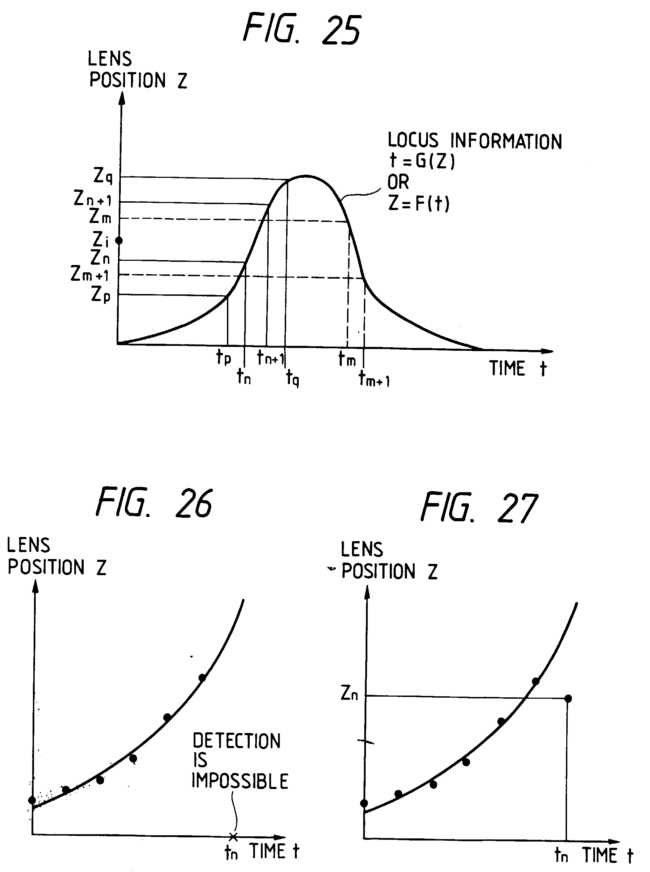

Fig. 25 is a chart showing another process in the locus compensating means;

Figs. 26 and 27 are charts showing the process in drive prohibition means;

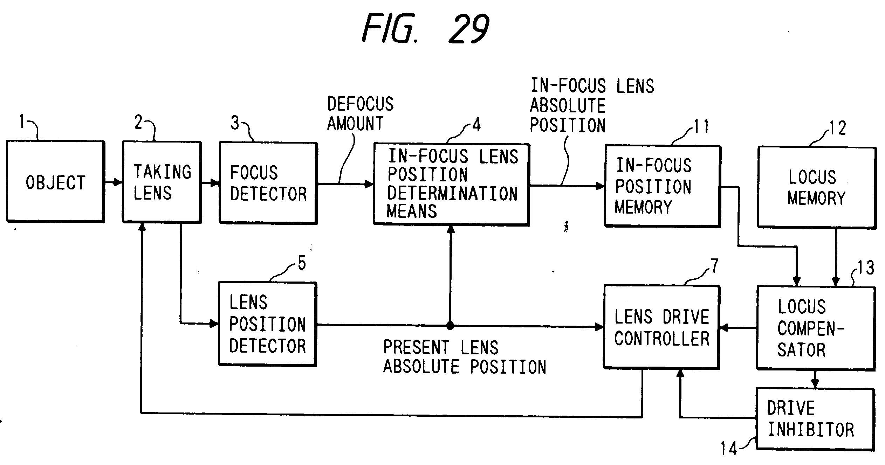

Fig. 28 is a chart showing another process in the locus compensating means;

Fig. 29 is a block diagram of a sixth embodiment of the present invention;

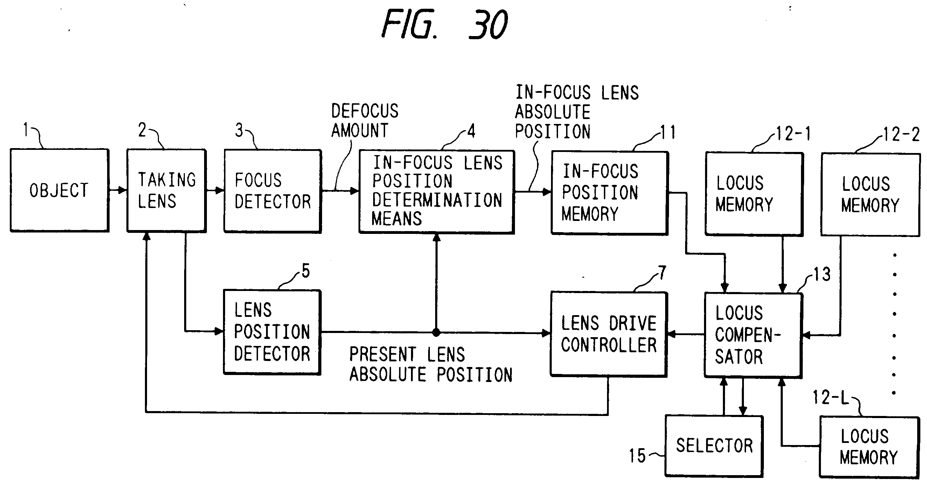

Fig. 30 is a block diagram of a seventh embodiment of the present invention;

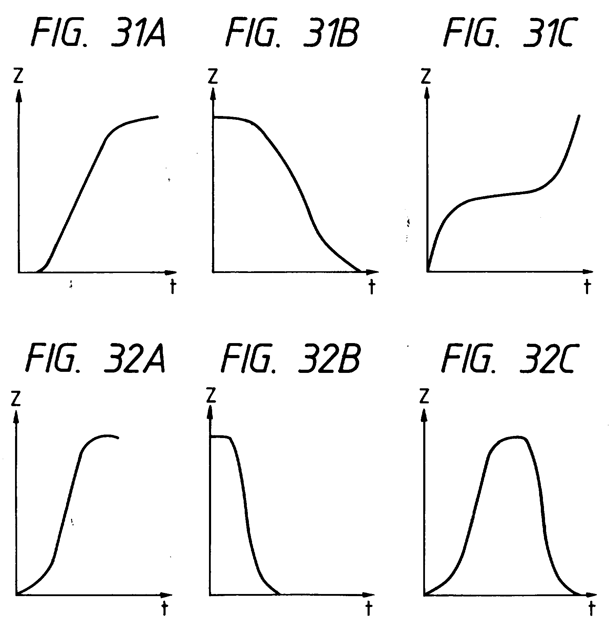

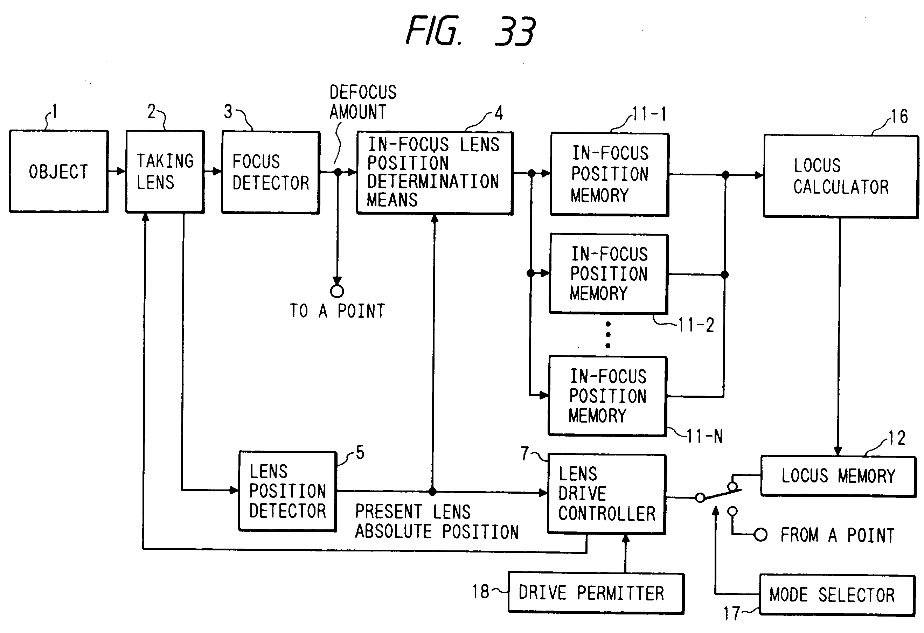

Figs. 31A, 31B, 31C, 32A, 32B and 32C are charts showing the process in plural locus memory means in the circuit shown in Fig. 30;

Fig. 33 is a block diagram of an eighth embodiment of the automatic focusing device of the present invention;

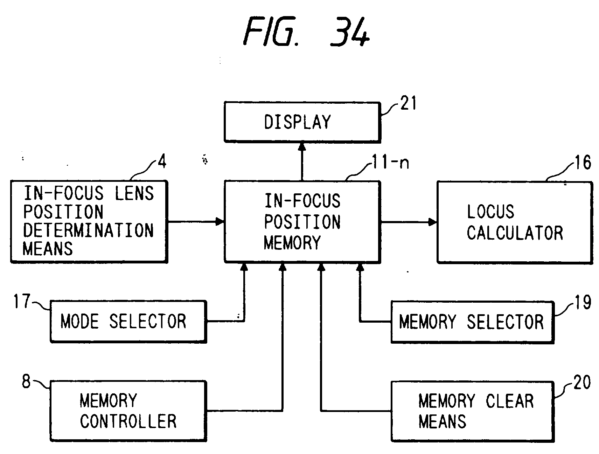

Fig. 34 is a block diagram of one of in-focus position memory means in Fig. 33;

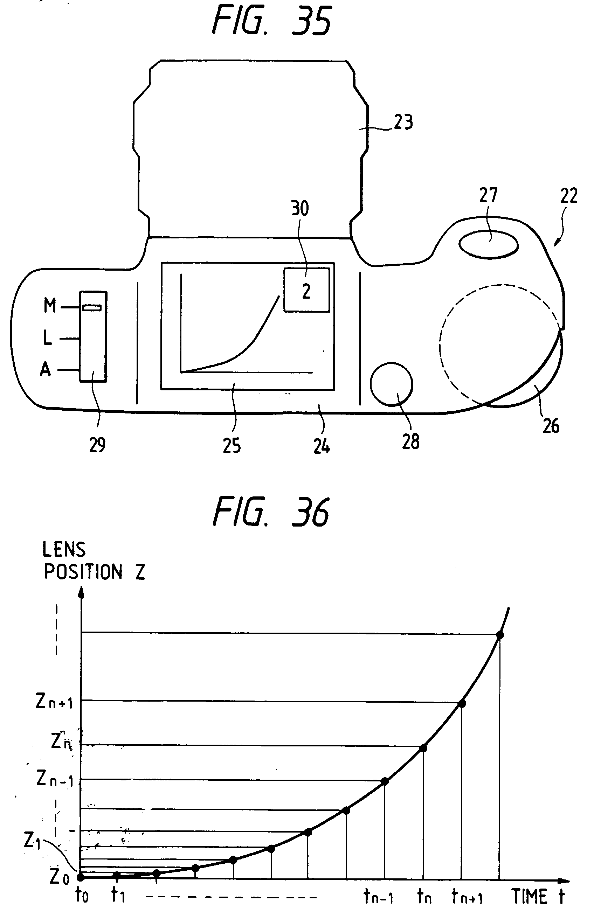

Fig. 35 is an external view of a camera in which the present invention is applied;

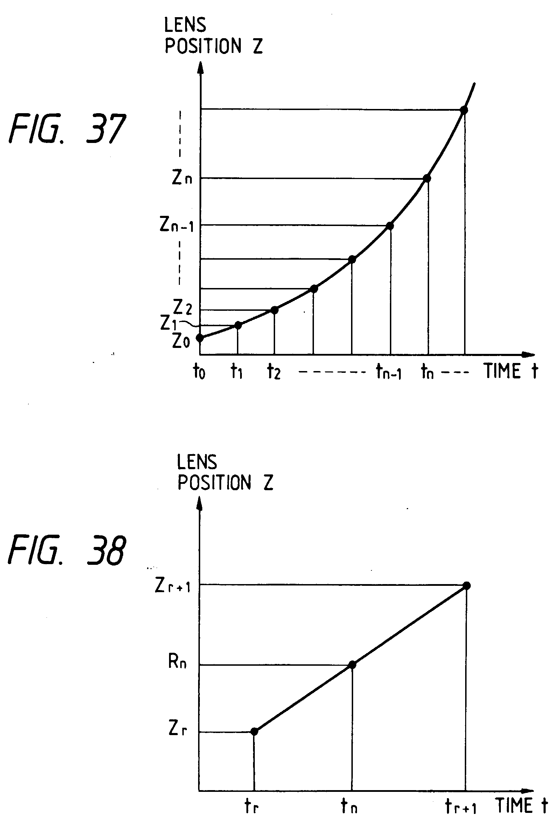

Figs. 36 and 37 are charts showing the process in the in-focus position memory means;

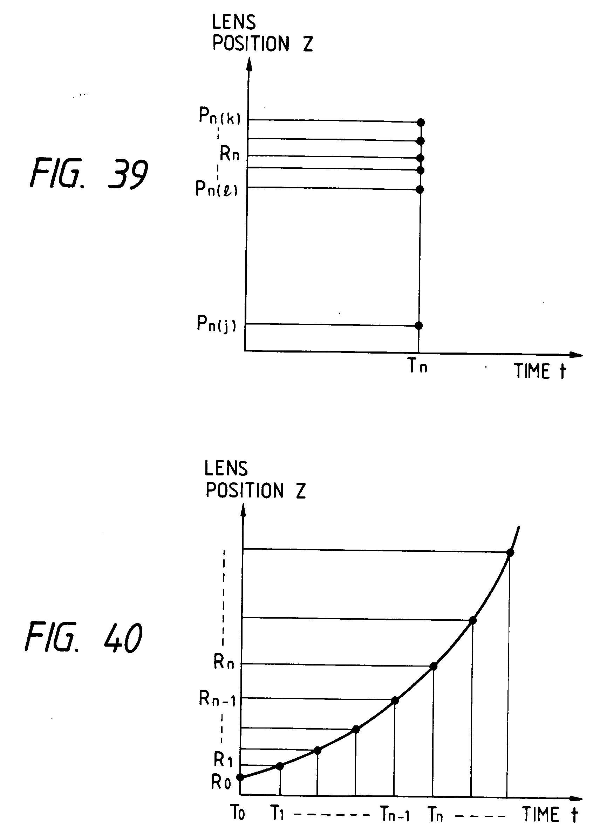

Figs. 38 and 39 are charts showing the process in locus calculating means; and

Fig. 40 is a chart showing the process in locus memory means.

## DESCRIPTION OF THE PREFERRED EMBODIMENTS

Fig. 5 is a block diagram of a first embodiment of the automatic focusing device of the present invention.

Referring to Fig. 5, the light beam from an object 1 is transmitted by the phototaking lens 2 and forms an image of the object on a film plane. The light beam is also split, by a known sub mirror, from the photographing optical axis and is guided to focus detection means 3 positioned for example at the bottom of the camera. Said focus detector means 3 is composed of a known focus detecting optical system, an image sensor and a focus detecting calculation unit, and, upon receiving the light from the object 1, detects the direction and amount of deviation between the object image plane and the film plane (hereinafter collectively called defocus amount). Said defocus amount is given at an interval, because the focus detector means 3 requires a charge accumulating time for the image sensor and a calculating time for focus detection. Said interval becomes longer when a photographing operation is conducted, since the focus detection cannot be executed during said operation.

Lens position detector means 5, for detecting the absolute position of the phototaking lens 2, for example represented by the lens shifting distance from a reference position of the lens 2 focused at the infinite object distance, is composed of an encoder for generating a predetermined number of pulses corresponding to a predetermined amount of movement of the lens 2, a counter for adding or subtracting the output pulses of said encoder according to the lens moving direction, and reset means for initializing said counter. More specifically, the content of said counter provides information corresponding to the absolute position of the phototaking lens 2, by resetting said counter after retracting the lens 2 to a position focused to the infinite distance at the start of power supply to the automatic focusing device, and thereafter counting the output pulses of said encoder.

In-focus lens position determining means 4 converts the defocus amount generated by the focus detector means 3 into the moving distance of the lens 2, and adds said moving distance corresponding to the defocus amount, to the lens position at the generation of said defocus amount, thereby determining a lens position for focusing the phototaking lens 2 to the object at the current moment (hereinafter called in-focus lens position). If the phototaking lens is moving in the course of focus detecting operation (charge accumulating time of image sensor and calculating time) of the focus detector means 3, a compensation corresponding to such lens movement is added to the defocus amount or to the in-focus lens position.

Lens movement pattern memory means 6 stores in advance lens movement pattern information representing the lens position as a function of time for a particular moving object.

For example, if the lens movement pattern information corresponding to the photographing situation of the moving object is represented by the solid line L in Fig. 2, the relationship between the lens position $Z(t)$ and time t is stored in a memory such as a ROM or a RAM, by addresses X, X + 1, X + 2, ... and data Z0, Z1, Z2, ... as shown in Fig. 6, wherein the addresses X, X + 1, X + 2, ... are defined by multiples of an interval $\Delta T$. In Fig. 6, X is a reference address, $\Delta T$ is the interval and Z is the lens position.

Again referring to Fig. 5, lens drive controller means 7 controls the drive of the phototaking lens 2 in position and time, in such a manner that said lens 2 is focused to the particular moving object, based on the lens movement pattern information, in-focus lens position information and lens position information.

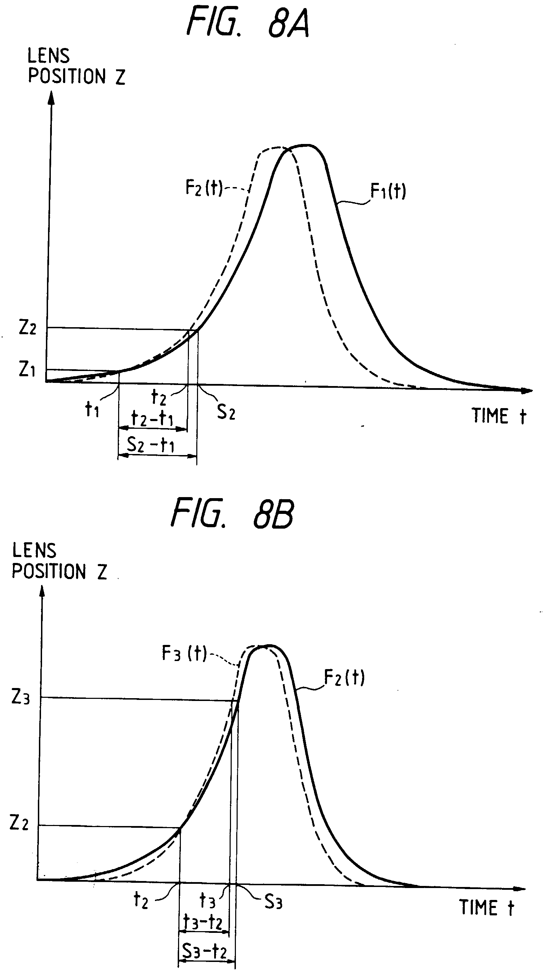

Now reference is made to Figs. 7 and 8 for explaining the control operation of the lens drive controller 7.

In Fig. 7A, a solid line L represents a lens movement pattern indicating the relation between the lens position and time, corresponding to a particular moving object. When in-focus lens position information Z1 (initial position) is generated at a time t1, there is looked for a point P1 where the lens movement pattern L assumes the value Z1. Though the lens movement pattern L has two values in time for a lens position Z, the point P1 can be determined by selecting a value with smaller time t.

When the first point P1 is determined, the lens drive controller 7 controls the lens 2, until the in-focus lens position information Z2 is generated at the next time t2, in such a manner that the position-time relationship of the lens 2 becomes a part L1 of the lens movement pattern L starting from the point P1, based on the lens position information.

Consequently the lens position, which is the actual control target, follows a solid line L1 shown in Fig. 7B.

In Fig. 7B, a broken line L' indicates the lens position-time relationship strictly following the actual object movement. Said broken line L' varies for each moving object, and does not strictly match the lens movement pattern L in Fig. 7A, but is anticipated to show little error in comparison therewith. Consequently, unless the period from t1 to t2 is extremely long, the error at time t2 is little even if the lens is driven using the solid line L1 as the target.

When new in-focus lens position information Z2 is generated at time t2, there is looked for a point P2 where the lens movement pattern L assumes a value Z2, under, a condition that said point P2 appears closest to P1 after said point P1, and the phototaking lens 2 is controlled according to the lens position information in such a manner that the lens position-time relationship becomes a part L2 of the lens movement pattern starting from the point P2, until the in-focus lens position information Z3 is generated at a next time t3. Consequently, the error at the time t2 between the solid line L' indicating the lens position corresponding to the actual object and the control target L1 is therefore compensated at this point.

Thereafter similar operations are repeated for the latest in-focus lens position information Z3, Z4, Z5, ... generated at times t3, t4, t5, ... to obtain control targets L3, L4, L5, ... shown in Fig. 7.

Since the control targets L1, L2, ... are not continuous at times t1, t2, ..., the actual movement of the phototaking lens 2 do not match said targets L1, L2, ... at such points. However the lens 2 can be so controlled as to match such targets L1, L2, ... at other periods, so that there is only little difference in the final result of actual lens position control from the lens position-time relationship in strict correspondence with the actual object movement.

Also the in-focus lens position information generated at intervals is not directly used for the drive control of the phototaking lens 2 but is merely used for the compensation of the lens movement pattern. Consequently the error in the lens drive control does not increase even when said interval becomes longer.

Furthermore, in order to reduce the error at the times t1, t2, ..., it is also possible to expand or reduce the time axis to the next target control according to the difference $\Delta Z$ between the in-focus lens position and the actual lens position and according to the lens moving direction, at the generation of new in-focus lens position information. For example, at the time t2 in Fig. 7B, the difference $\Delta Z$ between the generated in-focus lens position Z2 and the control target L1 is positive, and the lens moving direction is also positive, indicating that the actual moving speed of object is faster than predicted, or that the actual lens movement pattern L' is compressed in time axis, in comparison with the stored lens movement pattern L. It is therefore possible to compress the control target L2 starting from the time t2, (to increase the rate of change in time) according to the difference $\Delta Z$, thereby decreasing the error at t3.

Now reference is made to Figs. 8A and 8B for explaining an embodiment in which the drive control for the phototaking lens 2 is executed according to the above-explained method. Referring to Fig. 8A, the lens drive control is started from the lens position Z1 at t1, according to the stored lens movement pattern $Z = F1(t)$. When the in-focus lens position information Z2 is obtained at t2, there can be determined a time S2 for reaching the lens position Z2 if the lens movement is continued along the function $Z - F1(t)$. The error in lens position Z at time t2 can be considered to have resulted from a fact that the actual object movement corresponds to a lens movement pattern $Z = F2(t)$ different from the pattern $Z = F1(t)$ stored in advance. The pattern $Z = F2(t)$ can be expressed as follows, on the assumption that it is obtained by a compression or expansion in time axis and a parallel displacement of the pattern $Z = F1(t)$:

$$F2(t) = F1(a2 * t + b2) \tag{A}$$

Also there stand following conditions at times t1, t2, S2 and lens positions Z1, Z2:

$$F2(t1) = F1(t1) = Z1$$
$$F2(t2) = F1(S2) = Z2 \tag{B}$$

The coefficients a2, b2 in the equation (A) can be determined from the equations (B) as follows:

$$a2 = (t2 - t1)/S2 - t1)$$
$$b2 = \{(S2 - t2)/(S2 - t1)\} * t1 \tag{C}$$

Consequently the drive control of the phototaking lens from the time t2 can be conducted according to the lens movement pattern Z = F2(t) determined by the conditions (A) and (C).

Then, when the lens drive control is started, as shown in Fig. 8B, from the lens position Z2 at t2 according to the lens movement pattern Z = F2(t) and the in-focus lens position information Z3 is obtained at t3, there can be determined a time S3 for reaching the lens position Z3 if the lens movement is continued according to the function Z = F2(t). In a similar manner as the foregoing, there can be considered, in a period from t2 to t3, a lens movement pattern Z = F3(t) which is obtained by a compression or expansion and a parallel displacement of the lens movement pattern Z = F2(t) in time axis, as follows:

$$F3(t) = F2(a3 * t + b3)$$
$$= F1(a2 * a3 * t + b2 + a2 * b3)$$
$$= F1(A3 * t + B3) \tag{D}$$

Also there stand conditions at times t2, t3, S3 and lens positions Z2, Z3:

$$F3(t2) = F2(t2) = Z2$$
$$F3(t3) = F2(t3) = Z3 \tag{E}$$

The coefficients a3, b3, A3, B3 in the equation (D) can be determined from the relations (E) as follows:

$$a3 = (t3 - t2) / (S3 - t2)$$

$$b3 = \{(S3 - t3) / (S3 - t2)\} * t2$$

$$A3 = a2 * a3 \tag{F}$$

$$B3 = a2 * b3 + b2$$

Consequently the lens drive control from time t3 can be executed according to the lens movement pattern Z = F3(t) determined from the equations (D) and (F).

In general, when the in-focus lens position information Zn is obtained at a time tn, a time Sn for reaching the lens position Zn according to the lens movement pattern Z = Fn-1(t) immediately before tn is determined, and the lens drive control can be executed from the time tn according to a lens movement pattern Z = Fn(t) represented as follows:

$$Fn(t) = Fn-1(an * t + bn)$$
$$= F1(An * t + Bn)$$

wherein:

$$an = (t_n - t_{n-1})/(Sn - t_{n-1})$$

$$bn = \{(Sn - t_n)/(Sn - t_{n-1})\} * t_{n-1} \tag{G}$$

$$An = an \times An-1 = a1 \times a2 \times \ldots \times an$$

$$Bn = Bn-1 + An-1 \times bn \ldots$$

and A1 = 1, B1 = 0, a1 = 1, and b1 = 0.

It is furthermore possible to fix the time axis without compression or expansion, and to determine the rate K of variation of error in time as:

$$K = \Delta Z/(t2 - t1)$$

from the error $\Delta Z$ at time t2 in Fig. 7B and to compensate the control target L2 in the next period from t2 to t3 by L2 + K(t - t2).

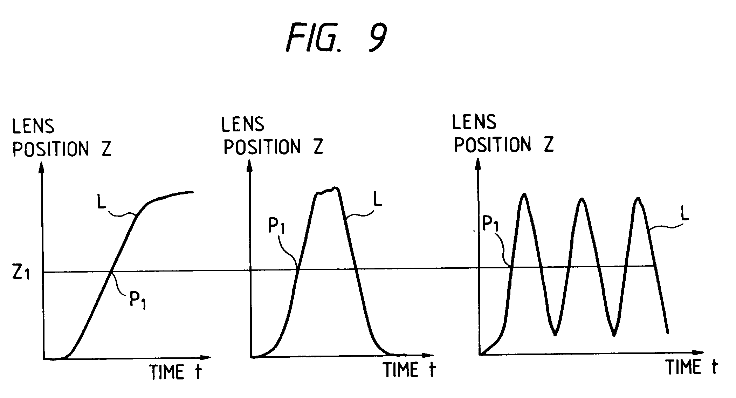

In general the lens movement pattern L has plural values for a lens position Z as shown in Fig. 9, but the search for a point corresponding to the in-focus lens position can be conducted in the direction of time axis and there is selected a point appearing after the preceding point and having the same moving direction as that of said preceding point.

In case a point corresponding to the generated in-focus lens position Z does not exist on the lens movement pattern L due to the deviation from the predicted distance, there is selected a point, on the lens movement pattern L, closest to the in-focus lens position Z, in the vicinity of the elapsed time from the preceding point on the time axis.

Also in case the focus detection becomes impossible at a certain time, or in case the difference between the generated in-focus lens position Z and the present lens position is larger than a predetermined value, the lens drive control may be continued with the preceding control target. Such continued control prevents the phototaking lens from being focused to the background even when the object temporarily runs out of the focus detecting area and the focus detection is conducted on the background.

Figs. 10 and 11 are flow chart of the operation sequence when the first in-focus lens position determining means 4 and the lens drive controller 7 are composed of a microcomputer.

At first referring to Fig. 10, when the defocus amount is determined by the focus detector 3, a step S1 initiates an interruption procedure. A step S2 determines the in-focus lens position from the defocus amount and the lens position, and a step S3 initiates an interruption procedure. These steps corresponds to the function of the in-focus lens position determining means 4.

Then, referring to Fig. 11, when the in-focus lens position determining means 4 initiates the interruption procedure in a step S4, a step S5 determines a corresponding point by a method shown in Fig. 8 based on the in-focus lens position and the lens movement pattern information, and a step S6 starts the drive control for the phototaking lens 2 according to the lens movement pattern L starting from said point. These steps correspond to the function of the lens drive controller 7.

Fig. 12 shows a second embodiment of the present invention, in which the content of the lens movement pattern memory means 6 is externally settable, and which is formed by attaching externally setting means 9 for the lens movement pattern and memory controller means 8 to the embodiment shown in Fig. 5.

The memory controller 8 is provided for resetting and renewing the content of the lens movement pattern memory means 6, and, in case of said pattern renewal, enables the memory writing into the lens movement pattern memory means 6 and disables the function of the lens drive controller 7. The lens movement pattern external-setting means 9 writes a new lens movement pattern into the memory of the lens movement pattern memory means 6 when the memory writing is enabled. Upon completion of writing, the memory controller 8 again disables the memory writing of the lens movement pattern memory means 6 and enables the function of the lens drive controller 7.

The user may directly provide the externally setting means 9 with a desired lens movement pattern, or select one of plural patterns provided in advance in the external setting means 9. Also the lens movement pattern may be calculated in the setting means 9 based on the photographing conditions (distance, speed etc.) provided by the user. For example, in a photographing condition shown in Fig. 1, the lens movement pattern can be calculated by the entry of the shortest distance S, initial distance P and speed V of automobile.

At first, the movement pattern d(t) of the object distance can be represented as follows:

$$d(t) = \sqrt{(V \cdot t - Z_0)^2 + S^2} \qquad (2)$$

wherein:

$$Z_0 = \sqrt{P^2 - S^2}$$

Then the lens movement pattern Z(t) can be represented as:

$$Z(t) = (d(t)/2 - f) - \sqrt{(d(t)/2 - f)^2 - f^2} \qquad (3)$$

wherein f is the focal length of the phototaking lens, and d(t) is the distance from the film plane to the object shown in (2).

This equation (3) can be approximated as:

$$Z(t) = f^2 / (d(t) - 2f) \qquad (4)$$

Fig. 13 shows a third embodiment of the present invention, which is featured by a fact that the content of the lens movement pattern memory means 6 can be set by the output of the in-focus lens position determining means 4, and which is formed by adding memory controller means 8 to the embodiment shown in Fig. 5.

The memory controller 8 is provided for resetting and renewing the content of the lens movement pattern memory means. 6, and, for such renewing, enables the memory writing of the lens movement pattern memory means 6 and disables the function of the lens drive controller 7. When said memory writing is enabled, the in-focus lens position determining means 4 writes the in-focus lens position information, as the new lens movement pattern information, into the lens movement pattern memory means 6. Upon completion of said writing, the memory controller 8 disables the memory writing of the lens movement pattern memory means 6 and enables the function of the lens drive controller 7.

Fig. 14 shows the mode of writing of the lens movement pattern information into the lens movement pattern memory means 6 by the in-focus lens position determining means 4. Taking the enabling time of writing as a reference time, the in-focus lens position information Z(t) (indicated by marks "X") generated at t1, t2, ..., tn, tn+1, ... after said enabling, respectively in pair with time, into the lens movement pattern memory means 6. If the interval $\Delta t$ is large, there may be written an interior lens position information.

7

In case of Fig. 14, the collection and writing of the lens movement pattern information are conducted while the phototaking lens 2 is stopped in order to shorten the interval $\Delta t$, but these operations may be conducted while the lens 2 is driven if the lens drive can be overlapped with the function of the focus detector 3. It is also possible to determine the lens movement pattern information by the average of plural detections instead of a single detection, or to record the lens movement pattern information and to feed the in-focus lens position information, obtained in the course of the function of the lens drive controller 7 based on said lens movement pattern information, back to said information.

Also the lens of long focal length often becomes incapable of focus detection so that the lens movement pattern information is difficult to collect, because it is generally difficult to follow a moving object with such lens, and such lens also required a large shifting amount. It is therefore possible also to collect the lens movement pattern information with a lens of shorter focal length, to convert the lens position information into the object distance information by the equation (3), and to convert it again into the lens position information utilizing the focal length f of the lens to be used.

Fig. 15 shows a fourth embodiment of the present invention, which is featured by a fact that the activation of the lens drive controller 7 is controlled by starting means 10, and which is formed by adding said starter means 10 the embodiment shown in Fig. 5.

Said starter means 10 allows the user to activate the lens drive controller 7 from a desired time or a desired object distance.

For example, if the lens drive controller 7 is to be activated for a desired period, the starter means 10 can be a simple switch, which enables or disables the function of the lens drive controller 7.

Also in case of activation from a desired distance, the user sets a distance in the starter means 10. For example, if the user wishes to activate the lens drive controller 7, in a situation shown in Fig. 1, when the object distance P becomes equal to or less than a distance P, the user sets the information that the distance is equal to or less than P in the starter means 10. Said starter means 10 converts the distance P into the lens position Z0 by the equation (3), and watches the in-focus lens position information generated at intervals. When the object is farther than the distance P as shown in Fig. 16, the starter means 10 does not activate the lens drive controller 7 since the in-focus lens position does not exceed Z0. As the object approaches, if the in-focus lens position information $Z(tn+1)$ generated at a time $t_{n+1}$ exceeds Z0, the starter means 10 activates the lens drive controller 7. Said distance P may be set manually on the phototaking lens 2. In such case the set lens position can be supplied into the starter means 10 through the lens position detector means 5.

Prior to the activation of the lens driver controller 7 by the starter means 10, the phototaking lens 2 may be either stopped or driven according to the defocus amount, as in the conventional lens drive control.

In the foregoing embodiments, the lens movement pattern information is stored in the memory means 6 in the form of time t and lens position $Z(t)$, but said information may also be stored in the form of time t and object distance $d(t)$ according to the equation (3). Even for a lens with variable focal length, such as a zoom lens, such form of storage allows conversion to the lens position at any focal length, according to the equation (3).

Also in the foregoing embodiments, the drive control of the phototaking lens 2 is principally executed with the lens movement pattern information while the in-focus lens position information or the defocus amount is used for correction or compensation, but it is also possible to normally effect the lens drive control such as prediction drive based on the defocus amount, and to switch to the lens drive control of the present invention when the focus detection becomes impossible or the conventional prediction drive becomes difficult to execute because of the short object distance.

Also in the foregoing embodiments shown in Figs. 5, 12, 13 and 15, the defocus amount of the phototaking lens 2 is detected by the TTL method utilizing the focus detector means 3, but it is also possible to directly measure the object distance for example by a trigonometry.

The foregoing 1st to 4th embodiments enable exact tracing of the moving object even when the movement thereof is complex and rapid, since the lens drive is controlled according to the lens movement pattern information stored in advance, and said drive control is corrected by the intermittently generated in-focus lens position information. Also the photographing operation can be smoothly inserted between the focus detecting operations, since the interval between the generations of in-focus lens position information can be selected sufficiently long.

Fig. 17 is a block diagram of a fifth embodiment of the automatic focusing device of the present invention, applied to a camera.

Referring to Fig. 17, the light beam from an object 1 is transmitted by a phototaking lens 2 and forms an image of the object on a film plane. The light beam is also split, by a known sub mirror, from the photographing optical axis and is guided to focus detector means 3 positioned for example at the bottom of the camera. Said focus detector means 3 is composed of a known focus detecting optical system, an image sensor and a focus detecting calculation unit, and, upon receiving the light from the object 1, detects the deviation between the object image plane and the film plane (said deviation including direction and amount; hereinafter collectively called defocus amount). Said defocus amount is given at an interval, because the focus detector means 3 requires a charge accumulating time for the image sensor and a calculating time for focus detection. Said interval becomes longer when a photographing operation is conducted, since the focus detection cannot be executed during said operation.

Lens position detector means 5, for detecting the absolute position of the phototaking lens 2, for example represented by the lens shifting distance from a reference position of the lens 2 focused at the infinite object distance, is composed of an encoder for generating a predetermined number of pulses corresponding to a predetermined amount of movement of the lens 2, a counter for adding or subtracting the output pulses of said encoder according to the lens moving direction, and reset means for initializing said counter. More specifically, the content of said counter provides information corresponding to the absolute position of the phototaking lens 2, by resetting said counter after retracting the lens 2 to a position focused to the infinite distance at the start of power supply to the automatic focusing device.

In-focus lens position determining means 4 converts the defocus amount generated by the focus detector means 3 into the moving distance of the lens 2, and adds said moving distance corresponding to the defocus amount, to the lens position at the generation of said defocus amount, thereby determining a lens position for focusing the phototaking lens 2 to the object at the current moment (hereinafter called in-focus lens position). If the phototaking lens is moving in the course of focus detecting operation (charge accumulating time of image sensor and calculating time) of the focus detector means 3, a compensation corresponding to such lens movement is added to the defocus amount or to the in-focus lens position.

In-focus position memory means 11 memorizes plural in-focus position data, intermittently generated by the in-focus lens position determining means 4, in respective pair with the time of generation. For example, if the in-focus position data $Z_0$, $Z_1$, $Z_2$, ..., $Z_{n-1}$, $Z_n$ are generated at times $t_0$, $t_1$, $t_2$, ..., $t_{n-1}$, $t_n$ as shown in Fig. 18, the time t and the in-focus position Z are stored in a rewritable memory such as a RAM with respective addresses (reference addresses being Y, W) as shown in Figs. 19A and 19B.

Locus memory means 12 stores in advance locus information or lens movement pattern information $Z = F(t)$ or $t = G(Z)$, indicating the in-focus lens position for a particular moving object, by the relationship between the lens position Z and time t.

For example, if a photographing situation of a moving object as shown in Fig. 4 is represented by locus information shown by a solid line in Fig. 20, the lens position $Z_k$ and time $t_k$ are stored, in a memory such as a ROM or a RAM, as coordinate values indicating the functional positions shown by each black point in Fig. 20, and interim values between the scattered points are filled in by a suitable interpolation equation. The storage of said locus information is conducted, for example, as shown in Fig. 21, by the time t and the lens position Z as a memory address and the memory content corresponding thereto. In Fig. 21, X indicates the reference address, $\Delta T$ is a constant time interval, and Z is the lens position. The lens position Z for a non-memorized time can be obtained from the lens position corresponding to the memorized time, according to a known interpolation equation.

In Fig. 21, the storage is conducted in the form of a function:

$$Z = F(t)$$

by taking the time t and the lens position Z respectively as a memory address and a memory content, but the storage may also be made in the form of a function:

$$t = G(Z)$$

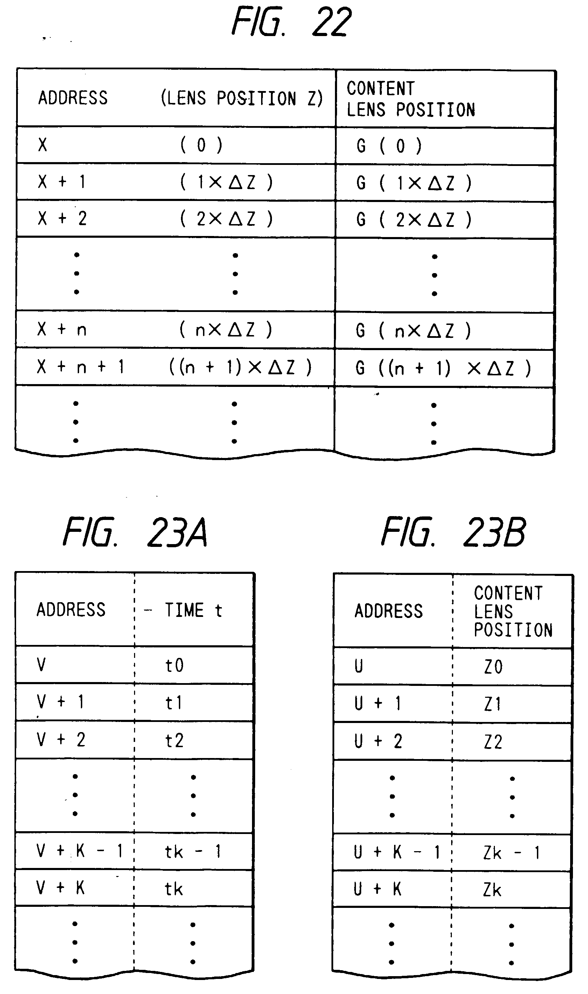

as shown in Fig. 22, by taking the lens position Z and the time t respectively as a memory address and a memory content. In this case the data storage is made in the form of time passing through the lens positions Z predetermined at a constant interval.

In case the time t and the lens position Z are stored at irregular intervals, these values are stored separately, utilizing the order k as an address offset value with respect to the reference addresses V, U, as shown in Figs. 23A and 23B. In this case the relationship between $t_k$ and $Z_k$ indicates the locus information $Z = F(t)$ and $t = G(Z)$ at the same time. The locus information function F(t) or G(Z) may be the original data of the time t and the in-focus position Z measured once or plural times with the in-focus lens position determining means 4 on the actual moving object, or may be obtained by a suitable processing such as statistical processing or interpolation. Furthermore said function may be the data of time t and in-focus position Z calculated on an imaginary moving object. It may also be a function itself, if the function F(t) or G(Z) can be represented by a mathematical equation. As an example, if said function is an n-th order function, the values Z or t may be directly calculated from the coefficients, stored in advance, of said mathematical equation.

Locus compensator means 13 corrects the locus information stored by the locus memory means 12 in such a manner that the errors with respect to the in-focus position data $(t_0, Z_0)$, $(t_1, Z_1)$, ..., $(t_n, Z_n)$ stored in the in-focus position memory means 11 become minimum. This operation will be explained in the following, with reference to Fig. 18, in a case where n sets of in-focus position data $(t_0, Z_0)$, $(t_1, Z_1)$, ..., $(t_n, Z_n)$ have been obtained up to the present.

The stored locus information function $t = G(Z)$ provides following function, by expansion or compression on the time axis and by parallel displacement:

$$t = A \times G(Z) + B = G'(Z) \tag{5}$$

The coefficients A, B in the equation (5) are suitably determined to minimize the error from n sets of in-focus position data $(t_0, Z_0)$, $(t_1, Z_1)$, ..., $(t_n, Z_n)$. The error E can be represented by the following equation:

$$E = \sum_{i=0}^{n} (E_i)^2 = \sum_{i=0}^{n} (t_i - A \times G(Z_i) - B)^2 \tag{6}$$

As the condition for minimizing the error E with respect to the variable A, B, there are taken two first-order partial differential equations:

$$\Delta E/\Delta A = \Delta E/\Delta B = 0$$

These equations can be rewritten as follows with respect to the coefficients A and B:

$$A = \frac{(n+1) \times \sum_{i=0}^{n} \{t_i \times G(Z_i)\} - \sum_{i=0}^{n} t_i \times \sum_{i=0}^{n} G(Z_i)}{(n+1) \times \sum_{i=0}^{n} \{G(Z_i)\}^2 - \{\sum_{i=0}^{n} G(Z_i)\}^2}$$

$$B = \frac{\sum_{i=0}^{n} t_i - A \times \sum_{i=0}^{n} G(Z_i)}{n+1} \tag{7}$$

If monotonously increasing locus information as shown in Fig. 20 is stored in the form of Figs. 22, 23A or 23B, G (Zi) in the equations (6), (7) can be determined from the following interpolation equation:

$$G(Z_i) = \{G(Z_{j+1}) - G(Z_j)\} \times \frac{Z_i - Z_j}{Z_{j+1} - Z_j} + G(Z_j) \tag{8}$$

wherein j is the number of lens position closest to the lens position Zi ($Z_j \le Z_i \le Z_{j+1}$ or $Z_j \ge Z_i \ge Z_{j+1}$).

Compensated locus information with new coefficients A, B can be obtained at every time tn by these equations (5) - (8). However, at time t0 when only one set of in-focus position state is available, the coefficient A is set as 1 and the compensation is made by the coefficient B only.

Also when G(Z) is not monotonously increasing but is a multi-value function, G(Zi) can still be determined from the equation (8), since the lens position number j close to the lens position Zi can be determined from the similarity between the stored in-focus positions and the locus information. As an example, in case the locus information G(Z) is a two-value function with respect to the lens position Z, an in-focus position Zi may be positioned between a set of locus information data $Z_n$, $Z_{n+1}$, or $Z_m$, $Z_{m+1}$. Out of these two sets with times tn, tm respectively corresponding to Zn, Zm, there is selected a set of which time is larger than the time tc corresponding to Zc in the data set (Zc, Zc+1) selected for the preceding in-focus position $Z_{i-1}$ and is smaller of the two. Thus, if tc is at a time tp, a data set (Zn, Zn+1) is selected for the in-focus position Zi. If tc is at Tq, there is selected the data set (Zm, Zm+1). Thus, even when the locus information has plural values with respect to the lens position Z, there can be selected only one set of locus information (Zj, Zj+1) on both sides of the in-focus position Zi, by selecting a suitable criterion.

Consequently the compensated locus information G′(Z) determined by the equations (5) to (8) provides, as shown in Fig. 18, a function minimizing the error with respect to the plural in-focus position data (t0, Z0), (t1, Z1), ..., (tn, Zn).

In the equations (6) and (7), the summation Σ is calculated from i = 0 to i = n, but it is also possible to calculate said summation from i = n = m to i = m, employing only m data in the past, or to calculate said summation only employing data within a predetermined past period T prior to the present.

Such method of calculation, correcting the locus information employing solely the data close to the present time, allows to reduce the correction error even for an object of varying speed.

In the focus detecting operation, it is difficult to constantly maintain the object in the focus detecting area, and the focus detection is made on the background or becomes impossible if the object eventually runs out of the focus detecting area. Thus, as shown in Figs. 26 and 27, the in-focus position data (t0, z0), (t1, Z1), ..., (tn, Zn) may show sudden change.

If the focus detection becomes impossible at a time tn as shown in Fig. 26, so that the in-focus position Zn cannot be obtained, the compensated locus information obtained at the time tn-1 may be employed in continuation for the lens drive control at the time tn and thereafter.

On the other hand, if an apparently erroneous in-focus lens position Zn is obtained at a time tn as shown in Fig. 27, the equation (6) will provide a large error E at said time tn. Consequently, if said error E exceeds a certain predetermined amount, the compensated locus information obtained at the time tn-1 may be used in continuation for the lens drive control at the time tn and thereafter. It is also possible, if the difference between the in-focus position Zn obtained at the time tn and the lens position at said time tn estimated from the compensated information stored at the time tn-1 exceeds a predetermined value, to use the compensated locus information obtained at the time tn-1 in continuation for the lens drive control at the time tn and thereafter.

In the foregoing description, the compensated locus information is obtained by a compression, an expansion and a parallel displacement of the locus information function on the time axis because the error in the locus information for a moving object is considered to principally arise from the difference in the moving speed of the object. It is also possible to obtain the compensated locus information by applying compression, expansion and parallel displacement to the locus information on the lens position axis, in order to correct the error resulting from difference in object distance (for example, in the shortest object distance S in Fig. 4), or to use both corrections at the same time or alternately.

In general, the compensation on the lens position axis becomes effective when the object distance becomes shorter. Consequently such compensation on the lens position axis may be employed only when the object is positioned at a short distance.

In the following there will be explained lens drive controller means 7. The lens drive controller means 7 effect the drive control, based on the compensated locus information determined by the locus compensator 13 and the lens position information, in such a manner that the lens position-time relationship matches the compensated stored information as shown in Fig. 18. For example, when the compensated locus information G'(Z) is obtained at time tn according to the equations (5) to (8), the lens position Zx according to said compensated locus information at a time tx after, the time tn is given by the following equation:

$$Zx = (Z_{r+1} - Z_r) \times \frac{t'_x - t_r}{t_{r+1} - t_r} + Z_r$$

wherein

$$t'_x = (t_x - B)/A$$
$$t_r \leqq t'_x \leqq t_{r+1} \tag{9}$$

According to this equation (9), the lens positions $Z_r$, $Z_{r+1}$ are obtained, as shown in Fig. 28, from the stored locus information, corresponding to $t_r$, $t_{r+1}$. Thus the lens position is controlled so as to reach $Z_x$ at an arbitrary time $t_x$ after the time $t_n$.

Thus, as explained above, the automatic focusing device shown in Fig. 17 drives the phototaking lens so as to be constantly focused to the object, whereby the user can obtain a well focused photograph.

Fig. 29 shows a sixth embodiment corresponding to an improvement on the embodiment shown in Fig. 17 and additionally including drive inhibitor means 14.

The drive inhibitor means 14 monitors the error E generated by the locus compensator 13 according to the equation (6), and enables or inhibits the function of the lens drive controller 7 according to the following criteria:

$$\begin{array}{ll} E/N \geqq H & \text{function inhibited} \\ & \tag{10} \\ E/N < H & \text{function enabled} \end{array}$$

wherein $N \geqq 3$.

In the relations (10), N is the number of summed terms in the equation (6) ($N = n + 1$ in case $i = i$ to n), and N is a predetermined value.

If the error E is large, namely if the movement of the object does not match the stored locus information, the control based on the relations (10) inhibits the lens drive control based on the compensated locus information, thereby avoiding unnecessary lens drive.

It is also possible to stabilize the operation by forming a hysteresis, by selecting the predetermined value H1 for inhibiting drive and the predetermined value H2 for enabling the drive so as to satisfy a relation H1 < H2 in (10). Also the response can be improved by limiting the number of summed terms, in the calculation of error E, to a predetermined number of data from the present time. Furthermore, during the above-mentioned inhibition, there may be conducted ordinary automatic focusing based on the defocus amount.

Also the start of lens drive based on the compensated locus information can be controlled by inhibiting the lens drive in case N is equal to or less than 3 in the relations (10). The probability of focusing is improved further, since the lens drive based on the compensated locus information is started only after the matching between the movement of object and the stored locus information is confirmed.

Furthermore, following criteria may be added to the conditions (10):

drive inhibited if

$$A > Ah,$$

$$A < Al,$$

$$B \overset{>}{} Bh \text{ or} \tag{11}$$

$$B \overset{<}{} Bl$$

drive enabled in other cases

In said relations (11), Ah, Al, Bh and Bl are predetermined values satisfying:

$$Ah > 1 > Al > 0, \qquad Bh > 0 > Bl.$$

For example there can be selected $Ah = 2$, $Al = 1/2$, $Bh = 100$ ms and $Bl = -100$ ms. The addition of such conditions allows to identify a low matching of the locus information if excessively large compensations are applied to the locus information. In such case the lens drive based on the compensated locus information is inhibited to avoid unnecessary lens drive.

Fig. 30 shows a seventh embodiment constituting an improvement on the embodiment shown in Fig. 17 and additionally containing plural (L) locus memory means 12-1 - 12-L and selector means 15.

The plural locus memory means 12-1 - 12-L respectively store different locus information as shown in Figs. 31A, 31B and 31C, and the locus compensator 13 effects compensation as indicated by the equations (5) - (8) on each locus information. The errors E1 - EL obtained from the equation (6) on said locus information are supplied to the selector means 15, which extracts the minimum error Ej and selects the compensated locus information providing said error Ej, from the plural compensated locus information determined by the locus compensator 13. The lens drive control is executed based on thus selected compensated locus information.

This embodiment is effective in simplifying the process in the locus compensator, by decomposing locus information having plural values with respect to the lens position Z into plural mono-value locus information and storing said plural locus information respectively in the plural locus memory means 12-1 - 12-L. For example, the locus information shown in Fig. 32C can be decomposed into those shown in Figs. 32A and 32B. In such decomposition, the decomposed plural locus information may have mutually common parts to a certain extent.

As explained above, the embodiment shown in Fig. 30 further improves the probability of focusing, since compensated locus information closest to the actual object movement is selected from plural information and is used for the lens drive control.

In the foregoing 5th to 7th embodiments, the drive control of the phototaking lens 2 is executed according to the compensated locus information while the in-focus lens position information or the defocus amount is used for compensating the locus information, but it is also possible to switch the conventional lens drive control based on the defocus amount and the lens drive control embodying the present invention.

Also in the embodiments shown in Figs. 17, 29 and 30, the defocus amount of the phototaking lens 2 is detected by the TTL method utilizing the focus detector means, but it is also possible to directly measure the object distance for example by a trigonometric method.

Also in comparison with a method of lens drive control directly based on the stored locus information, the 5th to 7th embodiments of the present invention, adapted for compensating the stored locus information with the in-focus position information and effecting the lens drive control based on thus compensated locus information, allow to reduce the focus error even when the conditions such as distance or speed of the moving object vary, thereby realizing an automatic focusing device capable of being flexibly adapted to various moving objects.

Fig. 33 is a block diagram of an 8th embodiment of the automatic focusing device of the present invention applied to a camera.

Referring to Fig. 33, the light beam from an object 1 is transmitted by a phototaking lens 2 and forms an image of the object on a film plane. The light beam is also split, by a known sub mirror, from the photographing optical axis and is guided to focus detector means 3 positioned for example at the bottom of the camera. Said focus detector means 3 is composed of a known focus detecting optical system an image sensor and a focus detecting calculation unit, and, upon receiving the light from the object 1, detects the direction and amount of deviation between the object image plane and the film plane (hereinafter collectively called defocus amount). Said defocus amount is given at an interval, because the focus detector means 3 requires a charge accumulating time for the image sensor and a calculating time for focus detection. Said interval becomes longer when a photographing operation is conducted, since the focus detection cannot be executed during said operation.

Lens position detector means 5, for detecting the absolute position of the phototaking lens 2, for example represented by the lens shifting distance from a reference position of the lens 2 focused at the infinite object distance, is composed of an encoder for generating a predetermined number of pulses corresponding to a predetermined amount of movement of the lens 2, a counter for adding or subtracting the output pulses of said encoder according to the lens moving direction, and reset means for initializing said counter. More specifically, the content of said counter provides information corresponding to the absolute position of the phototaking lens 2, by resetting said counter after retracting the lens 2 to a position focused to the infinite distance at the start of power supply to the automatic focusing device, and thereafter counting the output pulses of said encoder.

In-focus lens position determining means 4 converts the defocus amount generated by the focus detector means 3 into the moving distance of the lens 2, and adds said moving distance corresponding to the defocus amount, to the lens position at the generation of said defocus amount, thereby determining a lens position for focusing the phototaking lens 2 to the object at the current moment (hereinafter called in-focus lens position). If the phototaking lens is moving in the course of focus detecting operation (charge accumulating time of image sensor and calculating time) of the focus detector means 3, a compensation corresponding to such lens movement is added to the defocus amount or to the in-focus lens position.

In-focus position memory means 11-1 - 11-N store plural in-focus position data, generated intermittently by the in-focus lens position determining means 4, respectively paired with data of generating time. When in-focus position data $Z_0, Z_1, Z_2, ..., Z_{n-1}, Z_n$ are generated at times $t_0, t_1, t_2 ..., t_{n-1}, t_n$, as shown in Fig. 36, the time t and the in-focus position Z are stored, as shown in Figs. 19A and 19B, in a rewritable memory such as a RAM, as contents thereof with respective address numbers starting from reference addresses Y, W.

In the following the function of the in-focus position memory means 11-1 - 11-N will be explained in detail, with reference to Fig. 34, which is a block diagram of one of said plural in-focus position memories 11-1 - 11-N.

Mode selector means 17 selects either a memory mode for storing plural in-focus lens positions and times generated time-sequentially in the in-focus position memory means 11-N, or a locus drive mode for effecting the drive control for the phototaking lens 2 by means of the lens drive controller 7 according to the locus information from the locus memory means 12. The memory operation by the in-focus position memory means 11-N is enabled only when the memory mode is selected by the mode selector 17.

Memory selector means 19 selects, among plural in-focus position memory means 11-1 - 11-N, one 11-k (k = 1 - N) in arbitrary manner. Memory controller means 8 enables or disables the memory operation by the in-focus position memory 11-k selected by the memory selector 19. Memory clear means 20 clears the content of the in-focus memory means 11-k selected by the memory selector 19. Display means 21 displays the content stored in the in-focus memory 11-k selected by the memory selector 19.

In the above-explained structure, when the memory mode is selected by the mode selector 17 and an in-focus position memory 11-k is selected by the memory selector 19, the display means 21 displays the content stored therein and said content may be renewed or cleared by the memory controller 8 and the memory clear means 20. For example, when the stored content is renewed by the memory controller 8, the in-focus position memory means 11-k stores the in-focus position data $Z_0, Z_1, Z_2, ..., Z_{n-1}, Z_n$ generated by the in-focus lens position determining means 4 in respective pairs with time data as shown in Fig. 37, starting from a time (t0 = 0) when the memory operation is enabled by the memory controller 8.

The memory selector 19 may effect the selecting operation manually, or, in case the memory content is renewed by the memory controller 8, may automatically select a next in-focus position memory at the completion of such renewal.

Again referring to Fig. 33, locus calculator means 16 effects a statistical processing on the data stored in an in-focus position memory of which content has not been cleared, among the plural infocus position memories 11-1 - 11-N, thereby calculating locus information representing as a function of time, the in-focus lens position Z for focusing the phototaking lens 2 to a particular moving object.

In the following there will be explained the function of the locus calculator 16 in detail, with reference to Figs. 38 and 39.

At first, in order to convert the data stored in plural in-focus position memory means into data of a same time sequence ($T_0, T_1, ..., T_{n-1}, T_n, ...$), the locus calculator 16 effects the calculation indicated by the following formula, thereby determining the in-focus position data $P_0, P_1, ..., P_{n-1}, P_n, ...$ corresponding to the times $T_0, T_1, ..., T_{n-1}, T_n, ...$;

$$Pn = (Zr+1 - Zr) \times \frac{Tn\text{-}tr}{tr+1 \text{-} tr} + Zr \tag{12}$$

wherein n is a positive integer.

In the equation (12), the times $Z_{r+1}, Z_r$ are so selected as to satisfy a relation:

$$t_r \leqq T_n \leqq t_{r+1}$$

and $P_0 = Z_0$.

In this manner, based on the data stored in the plural in-focus position memories 11-k (k = 1 - N), there are determined the in-focus positions $P_0(k), ..., P_n(k), ...$ corresponding to the times $T_0, T_1, ..., T_{n-1}, T_n, ...$

Then, an average in-focus position $R_n$ of plural in-focus position data $P_n(k)$ corresponding to the contents of plural in-focus position memories 11-k for a same time $T_n$ is determined by the following equation:

$$R \, n = [ \, \Sigma \, \{P \, n \, (k) \} \, ] \, / \, m \qquad n = 0, 1, \cdots$$
$$\phantom{R \, n = [ \, \Sigma} \, k \qquad\qquad\qquad\qquad\qquad\qquad\qquad\qquad (13)$$

wherein k is selected for the in-focus position memories of which contents have not been cleared, and m is the number of such uncleared memories, so that $k \leqq m$.

If a value $P_n(j)$ is significantly deviated from the average $R_n$ as shown in Fig. 39, such value may be eliminated and the calculation of the equation (13) may be conducted again after the adjustment of the range of K and the value m.

For example, an ineffective value can be eliminated by the following condition based on the initially obtained average $R_n$:

$$IRn - Pn(k) \, I \geqq H \text{ ineffective value} \qquad\qquad (14)$$

wherein H is a predetermined constant.

As the in-focus position data $P_n(k)$ will not fluctuate too much for similar moving objects, the reliability by averaging is further improved by eliminating the ineffective data by the above-explained process.

Thus the locus calculator 16 can determine the locus information, namely the in-focus positions $R_0, ..., R_n, ...$ respectively corresponding to the times $T_0, T_1, ..., T_{n-1}, T_n, ...$ as shown in Fig. 40.

The locus memory means 12 stores the locus information obtained by the locus calculator 16.

Lens drive controller 7 effects the drive control for the phototaking lens according to the locus information stored in the locus memory means 12, or based on the in-focus position detected by the in-focus lens position determinating means 4 (or defocus amount detected by the focus detection means 3) and the lens position information generated by the lens position detection means 5. The aforementioned mode selector means 17 selects whether the lens drive control by the lens drive controller 7 is based on the locus information of the locus memory means 12, or on the information of the in-focus lens position determining means 4 and the lens position detector means 5.

Thus, when the locus drive mode is selected by the mode selector means 17, the lens drive controller 7 effects the lens drive control based on the locus information of the locus memory means 12, in such a manner that the position-time relationship of the phototaking lens matches the locus information as shown in Fig. 40. Since the locus information as shown in Fig. 40 is non-continuous, the data between the points can be determined by suitable interpolation.

Also when the memory mode is selected by the mode selector means 17, a memory operation is conducted by the in-focus position memory means 11-N, and lens drive control may be conducted by the lens drive controller 7 based on the in-focus position in such a manner that the position of the phototaking lens matches the in-focus position, as in the conventional automatic focusing control. Otherwise the lens drive control by the lens drive controller 7 may be prohibited. The former method has an advantage of not easily becoming incapable of focus detection, since the phototaking lens is driven to follow the object between the detections of in-focus position, or in overlapping with the detection of the focus position. On the other hand, the latter method has an advantage of more precise measurement of the in-focus position, since the interval between the detections of focus detection, as the lens is not driven.

The actual lens driving operation by the lens drive controller 7 is further controlled by the selection of drive enabling or disabling by drive permitter 18.

In the following there will be explained the function and the operating method of the automatic focusing device of the present invention, by an embodiment thereof applied to a camera as shown in Fig. 35.

Fig. 35 is a plan view of a single-lens reflex camera, wherein a lens 23 is mounted on a body 22 which is equipped with a liquid crystal display panel 25 (display means 21) on a pentagonal prisms unit 24. On the upper right face of the body there are provided a command dial 26 (memory selector 19), a shutter release button 27 (memory controller 18, drive permitter 18), and a cancel button 28 (memory clearing means 20). On the upper left face of the body there is provided a mode selector 29 (mode selector means 17). Other means shown in Fig. 33 are composed of a CPU, memories etc. incorporated in the body.

The mode selector 29 can select a memory mode M, a locus drive mode L or a normal AF mode A. These modes will be explained in the following.

[Normal AF mode (A)]

In this mode the in-focus position memory means 11 does not execute the memory operation of the in-focus position data, and the lens drive controller 7 executes the lens drive control based on the in-focus position information and the lens position information. Stated differently, this mode is the conventional auto-focusing mode. The lens drive is enabled when the shutter release button 27 is full- or half-pushed, but is disabled when said button is not actuated. An exposure control operation on the photographic film is conducted when said button is fully pushed. In this mode, the cancelling button 28 does not function, and the command dial 26 does not serve as the memory selector 19. Also the liquid crystal display panel 25 does not serve as the display means 21 but is used for displaying other information, such as of light metering.

[Memory mode (M)]

In this mode the memory operation of the in-focus position data can be executed by the in-focus position memory means 11. When the camera is switched to this mode from another, the command dial 26 (memory selector 19) is reset to select the in-focus position memory means 11-1, and a selection number "1" is displayed in a part 30 of the liquid crystal display panel 25. Then the direction of the camera is determined so as that the focus detection means 3 can catch a desired moving object, and, while said object is traced, the shutter release button 27 is half-pushed at a suitable moment, for example when the object passes a predetermined point. Starting from said moment, the in-focus position memory means 11-1 starts the storage of the in-focus position data. The storage operation is terminated when the shutter release button 27 is released again or when the memory becomes full, and the in-focus position data $Z_0$, $Z_1$, $Z_2$, ..., $Z_{n-1}$, $Z_n$, ... and the times $t_0$, $t_1$, $t_2$, ..., $t_{n-1}$, $t_n$, ... stored in the in-focus position memory 11-1 are displayed on the liquid crystal display panel 25 in a manner as shown in Fig. 36. If the operator is not satisfied with the displayed data, for example when the data are not uniform, he may cancel the data stored in the in-focus position memory 11-1 by depressing the cancelling button 28. In this state any in-focus position memory can be arbitrarily selected by turning the command dial 26, whereupon the number displayed in the part 30 of the display panel 25 is accordingly changed. After said memory selection, the storage operation can be made as explained above. In this manner the storage operation can be executed plural times for a moving object.

[Locus drive mode (L)]

In this mode the lens drive can be executed according to the locus information stored in the locus memory means 12. When the camera is switched from the mode M to this mode, the locus calculator means 16 calculates a locus from plural data stored in an in-focus position memory 11 which is effective at this moment. Said locus information is stored in the locus memory 12 and is displayed on the display panel 25. The lens drive is enabled when the operator half- or full-pushes the shutter release button 27, tracing the moving object. The lens drive based on the locus information may be started along the locus shown in Fig. 40, taking the point of drive enabling as the reference time ($t_0 = 0$), or starting from an in-focus position close to the point of drive enabling.

In this mode the cancelling button 28 does not function, and the command dial 26 does not serve as the memory selector means 19. On the display panel 25, there may be displayed the locus information or other information, for example of light metering, by the manipulation of the command dial 26.

Thus the operator can always maintained a focused state to the moving object and obtain a focused photograph, by storing the locus plural times on the actual object in the mode M selected by the mode selector 29, and then photographing the object in the course of a locus drive in the mode L.

The present invention is not limited to the foregoing embodiment. For example, there may be provided plural locus memory means 12 corresponding to the plural in-focus position memory means 11-N and the memory clearing means 20 may be so constructed as to clear the locus information by selecting one of the plural locus memory means.

In the foregoing description, the defocus amount of the phototaking lens 2 is detected by the TTL method with the focus detection means, but it is also possible to directly measure the object distance for example by a trigonometric method.

The automatic focusing device of the 8th embodiment for effecting the drive control for the phototaking lens according to a locus information stored in advance does not require a special device for the entry of the locus information, and provides a simple method of easy entry even for an unskilled operator, as the locus information is stored by the direct focus detection on the actual moving object.

Also since each locus information is determined from statistical processing of the data of plural in-focus positions, exact information can be determined even if each measurement of in-focus position contains certain error.

Furthermore, said device is switchable to conventional auto focusing control directly utilizing the output of the focus detecting means for determining the in-focus position, the operator can select an optimum drive mode according to the situation. Thus there can be provided an automatic focusing device providing little focusing error in overall performance and capable of flexibly handling various moving objects.

**Claims**

1. An automatic focusing device for focusing on a predetermined image plane the image of a moving object, comprising:

driving means for supporting and moving a focusing lens along the optical axis thereof with respect to said predetermined plane, said driving means being responsive to a lens position control signal, said device being characterized by:

memory means (6;12) for storing a lens movement pattern, said pattern comprising data representative of a predetermined relationship between time and lens position; and

control means (7) for generating said lens position control signal in accordance with said lens movement pattern data, thereby controlling the movement of said driving means with time in accordance with said lens movement pattern.

2. An automatic focusing device according to claim 1, further comprising:

a phototaking lens (2) mounted on said driving means, for forming an image of an object on said predetermined plane; and

focus detection means (3) for detecting an amount of defocus of said phototaking lens with respect to said predetermined plane;

wherein said control means (7) is arranged to generate said lens position control signal in dependence on the defocus amount detected by said focus detection means (3) while said phototaking lens is driven and on the lens movement pattern data, so as to maintain an in-focus state of said phototaking lens with respect to the moving object.

3. An automatic focusing device according to claim 2, further comprising:

lens position detection means (5) for detecting the actual position of said phototaking lens (2); and

in-focus lens position determining means (4) for determining an in-focus lens position in which said phototaking lens (2) would properly focus the moving object, on the basis of said detected defocus amount and lens actual position;

wherein said lens movement pattern data comprises a plurality of paired time and lens position values, and said control means is arranged to select a sequence of paired values therefrom by selecting an initial pair of values in accordance with said detected in-focus lens position being used as a positional reference.

4. An automatic focusing device according to claim 3, wherein said control means (7) is adapted to read said lens movement pattern values, having the initial position at the initially determined in-focus lens position, with the lapse of time thereby effecting lens drive in such a manner that the actual lens position conforms thereto, and, in the case that a new in-focus lens position is obtained in the course of said control, to correct the lens position of said lens movement pattern values to said new in-focus lens position and to re-start the reading of said lens movement pattern values from said new position.

5. An automatic focusing device according to claim 3 or claim 4, wherein said in-focus lens position determining means (4) repeatedly determines a current in-focus lens position, and the use of said lens movement pattern values by said control means (7) is repeatedly up-dated according to said current in-focus lens position.

6. An automatic focusing device according to any preceding claim, further comprising lens movement pattern setting means (9) for externally setting said predetermined lens movement pattern data.

7. An automatic focusing device according to claim 3, further comprising memory controller means (8) having a lens movement pattern drive mode and a lens movement pattern memory mode.

8. An automatic focusing device according to claim 7, wherein said memory controller means (8) is adapted, in said lens movement pattern memory mode, to store the relationship between the in-focus lens position and time as the lens movement pattern values in the lens movement pattern memory means (6).

9. An automatic focusing device according to claim 2, wherein said lens movement pattern memory means (6) is adapted to proportionally compress or expand the lens movement pattern data along the time axis, based on plural in-focus lens positions and intervals thereof.

10. An automatic focusing device according to claim 2, wherein said lens movement pattern data has plural values in time for a lens position, and said control means (7) is adapted to select, in the initial state, the smaller value in time of said lens movement pattern data.

11. An automatic focusing device according to claim 2, wherein said control means (7) comprises starter means (10) for instructing the start of lens drive control matching said lens movement pattern.

12. An automatic focusing device according to claim 2, further comprising:

lens position detecting means (5) for detecting the position of said phototaking lens (2);

in-focus lens position determining means (4) for intermittently determining an in-focus lens position in which said phototaking lens (2) would properly focus the moving object, based on said detected defocus amount and lens position;

in-focus position memory means (11) for storing plural in-focus lens positions and times generated time-sequentially; and

lens movement pattern compensating means (13) for compensating said lens movement pattern data and generating compensated lens movement pattern data in such a manner as to reduce the error between the lens movement pattern data stored in said lens movement pattern memory means (12) and the in-focus lens position determined by said in-focus lens position determining means (4);

wherein said control means comprises lens drive controller means (7) for effecting drive control for said phototaking lens (2), according to said compensated lens movement pattern data.

13. An automatic focusing device according to claim 12, wherein said lens drive controller means (7) is adapted to effect drive control for said phototaking lens (2) according to the compensated lens movement pattern data of a preceding time, in the case that said in-focus lens position determining means (4) is incapable of determining the in-focus lens position.

14. An automatic focusing device according to claim 12, wherein said lens drive controller means (7) is adapted to effect drive control for said phototaking lens according to the compensated lens movement pattern data of a preceding time, in the case that the in-focus lens position determined by said in-focus lens position determining means (4) shows a sudden change.

15. An automatic focusing device according to claim 12, wherein said lens movement pattern compensating means (13) is adapted to generate a signal indicating the error between said compensated lens movement pattern data and said in-focus lens position, and said device further comprises drive inhibiting means (14) for inhibiting drive control of said phototaking lens (2) by said lens drive controller means according to the compensated lens movement pattern data, in the case that said error signal is equal to or larger than a predetermined value.

16. An automatic focusing device according to claim 15, wherein said lens drive controller means (7) is adapted to effect drive control for said phototaking lens (2) according to said in-focus lens position, in the case that said error signal is equal to or larger than a predetermined value.

17. An automatic focusing device according to claim 15, wherein said lens movement pattern compensating means (13) is adapted to generate a compensating amount signal for the compensated lens movement pattern data signal, and said drive inhibiting means (14) is adapted to inhibit drive control for said phototaking lens by said lens drive controller means in the case that said compensation amount signal is equal to or larger than a predetermined value.

18. An automatic focusing device according to claim 12, further comprising plural lens movement pattern memory means (12-1 to 12-L) and selector means (15), wherein said lens movement pattern compensating means (13) is adapted to generate an error signal indicating the error between the lens movement pattern data stored in each of said plural lens movement pattern memory means and the in-focus lens position determined by said in-focus lens position determining means (4), and said selector (15) is adapted to select a compensated lens movement pattern corresponding to the one providing the minimum error signal.

19. An automatic focusing device according to claim 12, wherein said lens movement pattern compensating means (13) is adapted to generate the compensated lens movement pattern data by applying proportional expansion or compression and parallel displacement in lens position and in time to the lens movement pattern data.

20. An automatic focusing device according to claim 12, wherein said lens movement pattern compensating means (13) is adapted to generate the compensated lens movement pattern data by compensating said lens movement pattern data in such a manner as to reduce the errors with respect to the in-focus lens positions within a predetermined past period or of a predetermined number in the past.

**21.** An automatic focusing device according to claim 2, further comprising:

lens position detecting means (5) for detecting the position of said phototaking lens (2); and
in-focus lens position determining means (4) for determining an in-focus lens position in which said phototaking lens (2) would properly focus the moving object, based on said detected defocus amount and lens position; wherein said lens movement pattern memory means (6) is adapted for determining and storing lens movement pattern data indicating a lens position-time relationship for focusing said phototaking lens to a particular moving object, based on plural in-focus lens positions and times generated time-sequentially.

**22.** An automatic focusing device according to claim 21, further comprising:

plural in-focus position memory means (11-1 to 11-N) for storing plural in-focus lens positions and times generated time-sequentially; and
lens movement pattern calculating means (16) for determining lens movement pattern data indicating a lens position-time relationship for focusing said phototaking lens (2) to a particular moving object, based on the in-focus lens positions and times stored in said plural in-focus position memory means; wherein said lens movement pattern memory means (12) is adapted to store said determined lens movement pattern data.

**23.** An automatic focusing device according to claim 22, further comprising:
mode selector means (17) for selecting either an operation mode for storing, in said in-focus position memory means (11-1 to 11-N), the plural in-focus lens positions and times generated time-sequentially, or an operation mode for effecting drive control for said phototaking lens (2) by said lens drive controller means (7) according to said determined lens movement pattern data.

**24.** An automatic focusing device according to claim 22, further comprising memory selector means (19) for selecting one (11-n) of said plural in-focus position memory means (11-1 to 11-N).

**25.** An automatic focusing device according to claim 24, further comprising display means (21) for displaying the content of the in-focus position memory means (11-n) selected by said memory selector means (19).

**26.** An automatic focusing device according to claim 22, further comprising memory controller means (8) for controlling whether or not to store, in said plural in-focus position memory means (11-1 to 11-N), the plural in-focus lens positions and times.

**27.** An automatic focusing device according to claim 1, further comprising means (4) for repeatedly determining a current in-focus lens position, wherein said control means (7) is adapted for controlling the lens position in accordance with said predetermined lens movement data and the determined current in-focus lens position.

**28.** An automatic focusing device according to claim 1, further comprising:

a phototaking lens (2) for forming an image of an object on a predetermined plane;
focus detection means (3) for detecting an amount of defocus of an image plane of said phototaking lens with respect to said predetermined plane;
said lens movement pattern memory means (12) for storing, as lens movement pattern data, the relationship between the lens position and time for focusing said phototaking lens to a particular moving object; and
means (13) for modifying the relationship between the lens position and time, said relationship stored as said lens movement pattern data, on the basis of the defocus amount detected by said focus detection means (3) while said phototaking lens is driven by said control means (7);
wherein said control means (7) is adapted to control the lens position on the basis of the modified lens movement pattern data.


**Patentansprüche**

**1.** Automatische Fokussiervorrichtung zum Fokussieren des Bildes eines sich bewegenden Objekts auf eine vorgegebene Bildebene, umfassend

- eine Antriebseinrichtung zum Lagern und Bewegen eines Fokussier-Objektivs entlang dessen optischer Achse bezüglich der vorgegebenen Ebene, wozu die Antriebseinrichtung auf ein Objektivstellungs-Steuersignal anspricht,

gekennzeichnet durch

- eine Speichereinrichtung (6; 12) zum Speichern eines Objektivbewegungsmusters, welches Daten umfaßt, die repräsentativ sind für eine vorbestimmte Beziehung zwischen der Zeit und der Objektivstellung; und
- eine Steuereinrichtung (7) zum Erzeugen des Objektivstellungs-Steuersignals nach Maßgabe der Objektivbewegungsmuster-Daten, um dadurch die zeitabhängige Bewegung der Antriebseinrichtung nach Maßgabe des Objektivbewegungsmusters zu steuern.

2. Vorrichtung nach Anspruch 1, umfassend

- ein Aufnahmeobjektiv (2), welches an der Antriebseinrichtung gelagert ist, um ein Bild eines Objekts in der vorgegebenen Ebene zu erzeugen; und
- eine Fokusdetektiereinrichtung (3) zum Erfassen eines Unschärfemaßes des Aufnahmeobjektivs in Bezug auf die vorgegebene Ebene;
- wobei die Steuereinrichtung (7) derart ausgebildet ist, daß sie das Objektivstellungsbild durch Steuersignal in Abhängigkeit des von der Fokusdetektiereinrichtung (3) bei angetriebenem Aufnahmeobjektiv erfaßten Unschärfemaßes und anhand der Objektivbewegungsmuster-Daten erzeugt wird, um einen In-Fokus-Zustand des Aufnahmeobjektivs bezüglich des sich bewegenden Objekts beizubehalten.

3. Vorrichtung nach Anspruch 2, weiterhin umfassend

- eine Objektivstellungs-Erfassungseinrichtung (5), zum Erfassen der Ist-Stellung des Aufnahmeobjektivs (2); und
- eine In-Fokus-Objektivstellungs-Erfassungseinrichtung (4), die auf der Grundlage des ermittelten Unschärfemaßes und der Ist-Objektivstellung die In-Fokus-Objektivstellung feststellt, bei der das Aufnahmeobjektiv (2) richtig auf das sich bewegende Objekt fokussiert wäre;
- wobei die Objektivbewegungsmuster-Daten mehrere Zeit-Objektivstellung-Wertepaare aufweist, und die Steuereinrichtung derart ausgebildet ist, daß sie eine Folge von Wertepaaren hieraus auswählt, indem ein Anfangswertepaar nach Maßgabe der als Stellungsbezug verwendeten erfaßten In-Fokus-Objektivstellung ausgewählt wird.

4. Vorrichtung nach Anspruch 3, bei der
die Steuereinrichtung (7) dazu ausgebildet ist, die Objektivbewegungsmuster-Werte zu lesen, wobei die Anfangsstellung sich an der zu Beginn festgestellten In-Fokus-Objektivstellung befindet, wobei im Verlauf der Zeit dadurch das Objektiv in der Weise angetrieben wird, daß die Ist-Objektivstellung mit jener übereinstimmt, und, falls eine neue In-Fokus-Objektivstellung im Verlauf dieses Steuervorgangs erhalten wird, die Objektivstellung der Objektivbewegungsmuster-Werte korrigiert wird auf diese neue In-Fokus-Objektivstellung und das Lesen der Objektivbewegungsmuster-Werte von der neuen Stellung an erneut gestartet wird.

5. Vorrichtung nach Anspruch 3 oder 4, bei der
die In-Fokus-Objektivstellungs-Erfassungseinrichtung (4) wiederholt eine laufende In-Fokus-Objektivstellung bestimmt, und der Gebrauch der Objektivbewegungsmuster-Werte durch die Steuereinrichtung (7) wiederholt nach Maßgabe der laufenden In-Fokus-Objektivstellung aktualisiert wird.

6. Vorrichtung nach einem vorhergehenden Anspruch, gekennzeichnet durch
eine Objektivbewegungsmuster-Einstelleinrichtung (9) zum externen Einstellen der vorbestimmten Objektivbewegungsmuster-Daten.

7. Vorrichtung nach Anspruch 3, gekennzeichnet durch
eine Speichersteuereinrichtung (8), die eine Objektivbewegungsmuster-Antriebsbetriebsart und eine Objektivbewegungsmuster-Speicherbetriebsart aufweist.

8. Vorrichtung nach Anspruch 7, bei der
die Speichersteuereinrichtung (8) dazu ausgebildet ist, in der Objektivbewegungsmuster-Speicherbetriebsart die Beziehung zwischen der In-Fokus-Objektivstellung und der Zeit als die Objektivbewegungsmuster-Werte in der Objektivbewegungsmuster-Speichereinrichtung (6) abzuspeichern.

9. Vorrichtung nach Anspruch 2, bei der
   die Objektivbewegungsmuster-Speichereinrichtung (6) dazu ausgebildet ist, die Objektivbewegungsmuster-Daten entlang der Zeitachse proportional zu komprimieren oder zu expandieren, basierend auf mehreren In-Fokus-Objektivstellungen und deren Intervallen.

10. Vorrichtung nach Anspruch 2, bei der
    die Objektivbewegungsmuster-Daten mehrere zeitliche Werte für eine Objektivstellung aufweisen, und die Steuereinrichtung (7) dazu ausgebildet ist, im Anfangszustand die kleineren zeitlichen Werte der Objektivbewegungsmuster-Daten auszuwählen.

11. Vorrichtung nach Anspruch 2, bei der
    die Steuereinrichtung (7) eine Startereinrichtung (10) aufweist, um den Start der Objektiv-Antriebssteuerung in Anpassung an das Objektivbewegungs muster zu veranlassen.

12. Vorrichtung nach Anspruch 2, weiterhin umfassend

    - eine Objektivstellungs-Erfassungseinrichtung (5) zum Erfassen der Stellung des Aufnahmeobjektivs (2);
    - eine In-Fokus-Objektivstellungs-Erfassungseinrichtung (4), die, basierend auf dem ermittelten Unschärfemaß und der Objektivstellung, intermittierend die In-Fokus-Objektivstellung feststellt, in der das Aufnahmeobjektiv (2) richtig auf das sich bewegende Objekt fokussiert wäre;
    - eine In-Fokus-Objektivstellungs-Speichereinrichtung (2) zum Speichern mehrerer In-Fokus-Objektivstellungen und Zeiten, die zeitlich nacheinander generiert werden; und
    - eine Objektivbewegungsmuster-Kompensationseinrichtung (13) zum Kompensieren der Objektivbewegungsmuster-Daten und zum Generieren von kompensierten Objektivbewegungsmuster-Daten, in der Weise, daß der Fehler zwischen den in der Objektivbewegungsmuster-Speichereinrichtung (12) gespeicherten Objektivbewegungsmuster-Daten und der von der In-Fokus-Objektivstellungs-Erfassungseinrichtung (4) bestimmten In-Fokus-Objektivstellung verringert wird;
    - wobei die Steuereinrichtung eine Objektivantriebs-Steuereinrichtung (7) aufweist, um die Antriebssteuerung für das Aufnahmeobjektiv (2) nach Maßgabe der kompensierten Objektivbewegungsmuster-Daten vorzunehmen.

13. Vorrichtung nach Anspruch 12, bei der
    die Objektivantriebs-Steuereinrichtung (7) dazu ausgebildet ist, die Antriebssteuerung für das Aufnahmeobjektiv (2) nach Maßgabe der kompensierten Objektivbewegungsmuster-Daten einer vorbestimmten Zeit dann vorzunehmen, wenn die In-Fokus-Objektivstellungs-Erfassungseinrichtung (4) nicht in der Lage ist, die In-Fokus-Objektivstellung festzustellen.

14. Vorrichtung nach Anspruch 12, bei der
    die Objektivantriebs-Steuereinrichtung (7) dazu ausgebildet ist, die AntriebsSteuerung für das Aufnahmeobjektiv nach Maßgabe der kompensierten Objektivbewegungsmuster-Daten einer vorbestimmten Zeit vorzunehmen, falls die von der In-Fokus-Objektivstellungs-Erfassungseinrichtung (4) ermittelte In-Fokus-Objektivstellung eine plötzliche Änderung aufweist.

15. Vorrichtung nach Anspruch 12, bei der
    die Objektivbewegungsmuster-Kompensationseinrichtung (13) dazu ausgebildet ist, ein Signal zu erzeugen, welches die Abweichung zwischen dem kompensierten Objektivbewegungsmuster-Daten und der In-Fokus-Objektivstellung anzugeben, wobei die Vorrichtung außerdem eine Antriebssperreinrichtung (14) aufweist, um die Antriebssteuerung des Aufnahmeobjektivs (2) durch die Objektivantriebs-Steuereinrichtung nach Maßgabe der kompensierten Objektivbewegungsmuster-Daten dann zu unterbinden, wenn das Fehlersignal gleich oder größer als ein vorbestimmter Wert ist.

16. Vorrichtung nach Anspruch 15, bei der
    die Objektivantriebs-Steuereinrichtung (7) dazu ausgebildet ist, eine Antriebssteuerung für das Aufnahmeobjektiv (2) nach Maßgabe der In-Fokus-Objektivstellung dann vorzunehmen, wenn das Fehlersignal gleich oder größer als ein vorbestimmter Wert ist.

**17.** Vorrichtung nach Anspruch 15, bei der
die Objektivbewegungsmuster-Kompensationseinrichtung (13) dazu ausgebildet ist, ein Kompensationsmaßsignal für das kompensierte Objektivbewegungsmuster-Datensignal zu erzeugen, und die Antriebssperreinrichtung (14) dazu ausgebildet ist, die Antriebssteuerung für das Aufnahmeobjektiv durch die Objektivantriebs-Steuereinrichtung dann zu unterbinden, wenn das Kompensationsmaßsignal gleich oder größer als ein vorbestimmter Wert ist.

**18.** Vorrichtung nach Anspruch 12, umfassend

- mehrere Objektivbewegungsmuster-Speichereinrichtungen (12-1 bis 12-L) und eine Auswahleinrichtung (15), wobei
- die Objektivbewegungsmuster-Kompensationseinrichtung (13) dazu ausgebildet ist, ein den Fehler zwischen den in jeder der Objektivbewegungsmuster-Speichereinrichtungen gespeicherten Objektivbewegungsmuster-Daten und der von der In-Fokus-Objektivstellungs-Erfassungseinrichtung (4) ermittelten In-Fokus-Objektivstellung anzeigendes Fehlersignal zu generieren, und
- die Auswahleinrichtung (15) dazu ausgebildet ist, ein kompensiertes Objektivbewegungsmuster entsprechend dem jenigen Muster auszuwählen, welches das kleinste Fehlersignal liefert.

**19.** Vorrichtung nach Anspruch 12, bei der
die Objektivbewegungsmuster-Kompensationseinrichtung (13) dazu ausgebildet ist, die kompensierten Objektivbewegungsmuster-Daten dadurch zu generieren, daß sie auf die Objektivbewegungsmuster-Daten eine proportionale Expansion oder Kompression und einen parallelen Versatz in der Objektivstellung und der Zeit anwendet.

**20.** Vorrichtung nach Anspruch 12, bei der
die Objektivbewegungsmuster-Kompensationseinrichtung (13) dazu ausgebildet ist, die kompensierten Objektivbewegungsmuster-Daten dadurch zu generieren, daß die Objektivbewegungsmuster-Daten in der Weise kompensiert werden, daß die Fehler bezüglich der In-Fokus-Objektivstellungen innerhalb einer vorbestimmten vergangenen Zeitspanne oder einer vorbestimmten Anzahl in der Vergangenheit reduziert werden.

**21.** Vorrichtung nach Anspruch 2, gekennzeichnet durch

- eine Objektivstellungs-Erfassungseinrichtung (5) zum Erfassen der Stellung des Aufnahmeobjektivs (2); und
- eine In-Fokus-Objektivstellungs-Erfassungseinrichtung (4), um auf der Grundlage des nachgewiesenen Unschärfemaßes und der Objektivstellung eine In-Fokus-Objektivstellung zu bestimmen, in der das Aufnahmeobjektiv (2) richtig auf das sich bewegende Objekt fokussiert wäre;
- wobei die Objektivbewegungsmuster-Speichereinrichtung (6) dazu ausgebildet ist, Objektivbewegungsmuster-Daten zu ermitteln und zu speichern, die auf der Grundlage mehrerer In-Fokus-Objektivstellungen und zeitlich nacheinander generierten Zeitpunkten eine Linsenstellungs-Zeit-Beziehung zur Fokussierung des Aufnahmeobjektivs auf ein spezielles sich bewegendes Objekt angeben.

**22.** Vorrichtung nach Anspruch 21, gekennzeichnet durch

- mehrere In-Fokus-Stellungsspeichereinrichtungen (11-1 bis 11-N) zum Speichern mehrerer In-Fokus-Objektivstellungen und Zeitpunkte, die zeitlich sequentiell generiert werden; und
- eine Objektivbewegungsmuster-Berechnungseinrichtung (16), die, basierend auf den In-Fokus-Objektivstellungen und Zeitpunkten, die in den mehreren In-Fokus-Stellungs-Speichereinrichtungen gespeichert sind, Objektivbewegungsmuster-Daten ermittelt, die eine Objektivstellungs-Zeitbeziehung zur Fokussierung des Aufnahmeobjektivs (2) auf ein spezielles sich bewegendes Objekt angeben;
- wobei die Objektivbewegungsmuster-Speichereinrichtung (12) dazu ausgebildet ist, die vorbestimmten Objektivbewegungsmuster-Daten zu speichern.

**23.** Vorrichtung nach Anspruch 22, weiterhin umfassend

eine Betriebsartselektoreinrichtung (17) zum Auswählen entweder einer Speicherbetriebsart, in der in der In-Fokus-Stellungs-Speichereinrichtung (11-1 bis 11-N) die zeitlich sequentiell generierten mehreren In-Fokus-Objektivstellungen und Zeitpunkte gespeichert werden, oder einer Betriebsart zum Bewirken einer Antriebssteuerung für das Aufnahmeobjektiv (2) durch die Objektivantriebs-Steuereinrichtung (7) nach Maßgabe der festgestellten Objektivbewegungsmuster-Daten.

**24.** Vorrichtung nach Anspruch 22, gekennzeichnet durch
eine Speicherselektoreinrichtung (19) zum Auswählen einer (11-n) der mehreren In-Fokus-Stellungs-Speichereinrichtungen (11-1 bis 11-N).

**25.** Vorrichtung nach Anspruch 24, gekennzeichnet durch
eine Anzeigeeinrichtung (21) zum Anzeigen des Inhalts der von der Speicherselektoreinrichtung (19) ausgewählten In-Fokus-Stellungs-Speichereinrichtung (11-n).

**26.** Vorrichtung nach Anspruch 22, gekennzeichnet durch
eine Speichersteuereinrichtung (8) zum Steuern, ob in den mehreren In-Fokus-Stellungs-Speichereinrichtungen (11-1 bis 11-N) die mehreren In-Fokus-Objektivstellungen und Zeitpunkte gespeichert werden oder nicht.

**27.** Vorrichtung nach Anspruch 1, gekennzeichnet durch
eine Einrichtung (4) zum wiederholten Erfassen einer laufenden In-Fokus-Objektivstellung, wobei die Steuereinrichtung (7) dazu ausgebildet ist, die Objektivstellung nach Maßgabe der vorbestimmten Objektivbewegungsdaten und der erfaßten laufenden In-Fokus-Objektivstellung zu steuern.

**28.** Vorrichtung nach Anspruch 1, umfassend

- ein Aufnahmeobjektiv (2) zum Erzeugen eines Bildes eines Objekts in einer vorbestimmten Ebene;
- eine Fokusdetektiereinrichtung (3) zum Erfassen eines Unschärfemaßes einer Bildebene des Aufnahmeobjektivs in bezug auf die vorbestimmte Ebene;
- wobei die Objektivbewegungsmuster-Speichereinrichtung (12) als Objektivbewegungsmuster-Daten die Beziehung zwischen der Objektivstellung und der Zeit zum Fokussieren des Aufnahmeobjektivs auf ein spezielles sich bewegendes Objekt speichert; und
- eine Einrichtung (13) zum Modifizieren der in Form der Objektivbewegungsmuster-Daten gespeicherten Beziehung zwischen der Objektivstellung und der Zeit auf der Grundlage des von der Fokusdetektiereinrichtung (3) erfaßten Unschärfemaßes, während das Aufnahmeobjektiv von der Steuereinrichtung (7) angetrieben wird;
- wobei die Steuereinrichtung (7) dazu ausgebildet ist, die Objektivstellung auf der Grundlage der modifizierten Objektivbewegungsmuster-Daten zu steuern.


## Revendications

**1.** Dispositif de mise au point automatique pour exécuter la mise au point de l'image d'un objet mobile, dans un plan image prédéterminé, comprenant :

des moyens d'entraînement pour supporter et déplacer une lentille de mise au point le long de son axe optique par rapport audit plan prédéterminé, lesdits moyens d'entraînement étant aptes à répondre à un signal de commande de position de la lentille, ledit dispositif étant caractérisé par :
des moyens de mémoire (6;12) pour mémoriser un profil de déplacement de la lentille, ledit profil comprenant des données représentatives d'une relation prédéterminée entre le temps et la position de la lentille; et
des moyens de commande (7) pour produire ledit signal de commande de position de la lentille en fonction desdites données du profil de déplacement de la lentille, ce qui permet de commander dans le temps le déplacement desdits moyens d'entraînement en fonction dudit profil de déplacement de la lentille.

**2.** Dispositif de mise au point automatique selon la revendication 1, comprenant :

une lentille photographique (2) montée sur lesdits moyens d'entraînement, pour former une image d'un objet dans ledit plan prédéterminé; et
des moyens de détection de mise au point (3) pour détecter l'écart de mise au point de ladite lentille photographique par rapport audit plan prédéterminé;
lesdits moyens de commande (7) étant agencés de manière à produire ledit signal de commande de position de la lentille en fonction de l'écart de mise au point détecté par lesdits moyens de détection de mise au point (3) alors que ladite lentille photographique est entraînée, et en fonction des données du profil de déplacement de la lentille, afin de maintenir un état focalisé de ladite lentille photographique par rapport à l'objet mobile.

**3.** Dispositif de mise au point automatique selon la revendication 2, comportant en outre :

des moyens (5) de détection de position de lentille pour détecter la position actuelle de ladite lentille photographique (2);

des moyens (4) de détermination de la position focalisée de la lentille pour déterminer une position focalisée de la lentille, dans laquelle ladite lentille photographique (2) réalise une mise au point correcte sur l'objet mobile, sur la base dudit écart de mise au point détecté et de la position actuelle de la lentille;

lesdites données du profil de déplacement de la lentille comprenant une pluralité de valeurs appariées de temps et de position de la lentille, et lesdits moyens de commande étant agencés de manière à sélectionner, à partir de cette valeur, une séquence de valeurs appariées au moyen de la sélection d'un couple initial de valeurs en fonction de ladite position focalisée détectée de la lentille, utilisée en tant que référence de position.

4. Dispositif de mise au point automatique selon la revendication 3, dans lequel lesdits moyens de commande (7) sont adaptés pour lire lesdites valeurs du profil de déplacement de la lentille, dont la position initiale est la position focalisée de la lentille, déterminée initialement, dans le temps, pour réaliser ainsi un entraînement de la lentille de manière que la position actuelle de la lentille soit adaptée à cette position initiale, et, dans le cas où la nouvelle position focalisée de la lentille est obtenue au cours de ladite commande, pour corriger la position de la lentille correspondant auxdites valeurs de profil de déplacement de la lentille en vue d'obtenir ladite nouvelle position focalisée de la lentille, et redémarrer la lecture desdites valeurs du profil de déplacement de la lentille à partir de ladite nouvelle position.

5. Dispositif de mise au point automatique selon la revendication 3 ou 4, dans lequel lesdits moyens (4) de détermination de la position de la lentille focalisée déterminent de façon répétée une position actuelle focalisée de la lentille, et l'utilisation desdites valeurs du profil de déplacement de la lentille par lesdits moyens de commande (7) est mise à jour de façon répétée en fonction de ladite position actuelle de la lentille focalisée.

6. Dispositif de mise au point automatique selon l'une quelconque des revendications précédentes, comprenant en outre des moyens (9) de réglage du profil de déplacement de la lentille pour régler extérieurement lesdites données prédéterminées du profil de déplacement de la lentille.

7. Dispositif de mise au point automatique selon la revendication 3, comprenant en outre des moyens (8) de commande de mémoire, comportant un mode de commande du profil de déplacement de la lentille et un mode de mémorisation du profil de déplacement de la lentille.

8. Dispositif de mise au point automatique selon la revendication 7, dans lequel lesdits moyens (8) de commande de mémoire sont adaptés, dans ledit mode de mémorisation du profil de déplacement de la lentille, pour mémoriser la relation entre la position focalisée de la lentille et l'instant de focalisation, en tant que valeurs du profil de déplacement de la lentille dans les moyens (6) formant mémoire du profil de déplacement de la lentille.

9. Dispositif de mise au point automatique selon la revendication 2, dans lequel lesdits moyens (6) formant mémoire du profil de déplacement de la lentille sont adaptés pour comprimer ou dilater, de façon proportionnelle, les données du profil de déplacement de la lentille sur l'axe des temps, sur la base de plusieurs positions focalisées de la lentille et d'intervalles entre ces positions.

10. Dispositif de mise au point automatique selon la revendication 2, dans lequel lesdites données du profil de déplacement de la lentille comportent plusieurs valeurs de temps pour une position de la lentille, et lesdits moyens de commande (7) sont adaptés pour sélectionner, dans l'état initial, la valeur de temps la plus petite desdites données du profil de déplacement de la lentille.

11. Dispositif de mise au point automatique selon la revendication 2, dans lequel lesdits moyens de commande (7) comprennent des moyens de démarrage (10) pour commander le démarrage d'une commande d'entraînement de la lentille adapté audit profil de déplacement de la lentille.

12. Dispositif de mise au point automatique selon la revendication 2, comprenant en outre :

des moyens (5) de détection de position de la lentille pour détecter la position de ladite lentille photographique (2);

des moyens (4) de détermination de la position focalisée de la lentille pour déterminer de façon intermittente une position focalisée de la lentille, dans laquelle ladite lentille photographique (2) réalise une mise au point correcte sur l'objet mobile, sur la base dudit écart détecté de mise au point de ladite position de la lentille;

des moyens (11) formant mémoire de positions focalisées pour mémoriser plusieurs positions focalisées de la lentille et instants de focalisation, produits d'une manière séquentielle dans le temps; et

des moyens (13) de compensation du profil de déplacement de la lentille pour compenser lesdites données du profil de déplacement de la lentille et produire des données compensées du profil de déplacement de la lentille de manière à réduire l'écart entre les données du profil de déplacement de la lentille, mémorisées dans lesdits moyens (12) formant mémoire du profil de déplacement de la lentille, et la position focalisée de la lentille, déterminée par lesdits moyens (4) de détermination de ladite position focalisée de la lentille;

lesdits moyens de commande comprenant des moyens (7) formant dispositif de commande d'entraînement de la lentille pour exécuter une commande d'entraînement pour ladite lentille photographique (2) en fonction desdites données compensées du profil de déplacement de la lentille.

13. Dispositif de mise au point automatique selon la revendication 12, dans lequel lesdits moyens (7) formant dispositif de commande d'entraînement de la lentille sont adaptés pour exécuter une commande d'entraînement pour ladite lentille photographique (2) en fonction des données compensées du profil de déplacement de la lentille à un instant précédent, dans le cas où lesdits moyens (4) de détermination de la position focalisée de la lentille sont incapables de déterminer la position focalisée de la lentille.

14. Dispositif de mise au point automatique selon la revendication 12, dans lequel lesdits moyens (7) formant dispositif de commande d'entraînement de la lentille sont adaptés pour exécuter une commande d'entraînement de ladite lentille photographique en fonction des données compensées du profil de déplacement de la lentille à un instant précédent, dans le cas où la position focalisée de la lentille déterminée par lesdits moyens (4) de détermination de la position focalisée de la lentille indique une brusque variation.

15. Dispositif de mise au point automatique selon la revendication 12, dans lequel lesdits moyens (13) de compensation du profil de déplacement de la lentille sont adaptés pour produire un signal indiquant l'écart entre lesdites données compensées du profil de déplacement de la lentille et ladite position focalisée de la lentille, et ledit dispositif comprend en outre des moyens de blocage d'entraînement (14) pour bloquer la commande d'entraînement de ladite lentille photographique (2) par lesdits moyens formant dispositif de commande d'entraînement de la lentille en fonction des données compensées du profil de déplacement de la lentille, dans le cas où ledit signal d'écart est égal ou supérieur à une valeur prédéterminée.

16. Dispositif de mise au point automatique selon la revendication 15, dans lequel lesdits moyens (7) formant dispositif de commande d'entraînement de la lentille sont adaptés pour réaliser la commande d'entraînement de ladite lentille photographique (2) en fonction de ladite position focalisée de la lentille, dans le cas où ledit signal d'écart est égal ou supérieur à une valeur prédéterminée.

17. Dispositif de mise au point automatique selon la revendication 15, dans lequel lesdits moyens (13) de compensation du profil de déplacement de la lentille sont adaptés pour produire un signal de quantité de compensation pour le signal de données compensées du profil de déplacement de la lentille, et lesdits moyens de blocage d'entraînement (14) sont adaptés pour bloquer une commande d'entraînement de ladite lentille photographique par lesdits moyens formant dispositif de commande d'entraînement de la lentille, dans le cas où ledit signal de quantité de compensation est égal ou supérieur à une valeur prédéterminée.

18. Dispositif de mise au point automatique selon la revendication 12, comprenant en outre plusieurs moyens (12-1 à 12-L) formant mémoires de profils de déplacement de la lentille et des moyens sélecteurs (15), lesdits moyens (13) de compensation du profil de déplacement de la lentille étant adaptés pour produire un signal d'écart indiquant l'écart entre les données du profil de déplacement de la lentille, mémorisées dans chacun de ladite pluralité de moyens formant mémoire de profils de déplacement de la lentille, et la position focalisée de la lentille déterminée par lesdits moyens (4) de détermination de la position focalisée de la lentille, et ledit sélecteur (15) est adapté pour sélectionner un profil compensé de déplacement de la lentille correspondant à un profil fournissant le signal d'écart minimum.

19. Dispositif de mise au point automatique selon la revendication 12, dans lequel lesdits moyens (13) de compensation du profil de déplacement de la lentille sont adaptés pour produire les données compensées du profil de déplacement de la lentille par application d'une dilatation ou d'une compression proportionnelle et d'un décalage parallèle de la position de la lentille et du temps, aux données du profil de déplacement de la lentille.

20. Dispositif de mise au point automatique selon la revendication 12, dans lequel lesdits moyens (13) de compensation du profil de déplacement de la lentille sont adaptés pour produire les données compensées du profil de déplacement de la lentille par compensation desdites données du profil de déplacement de la lentille de manière à réduire les écarts par rapport aux positions focalisées de la lentille pendant une période précédente prédéterminée ou par rapport à un nombre prédéterminé par le passé.

**21.** Dispositif de mise au point automatique selon la revendication 2, comprenant en outre :

des moyens (5) de détection de position de lentille pour détecter la position de ladite lentille photographique (2); et

des moyens (4) de détermination de la position focalisée de la lentille pour déterminer une position focalisée de la lentille, dans laquelle ladite lentille photographique (2) réalise une mise au point correcte sur l'objet mobile, sur la base dudit écart de mise au point détecté et de ladite position de la lentille;

lesdits moyens (6) formant mémoire de profils de déplacement de la lentille étant adaptés pour déterminer et mémoriser des données du profil de déplacement de la lentille, indiquant une relation position de la lentille-temps pour focaliser ladite lentille photographique sur un objet mobile particulier, sur la base de plusieurs positions focalisées de la lentille et de plusieurs instants, produits séquentiellement dans le temps.

**22.** Dispositif de mise au point automatique selon la revendication 21, comprenant en outre :

plusieurs moyens (11-1 à ll-N) formant mémoires de positions focalisées pour mémoriser plusieurs positions focalisées de la lentille et plusieurs instants, produits séquentiellement dans le temps; et

des moyens (16) de calcul du profil de déplacement de la lentille pour déterminer des données du profil de déplacement de la lentille indiquant une relation position de la lentille-temps pour focaliser ladite lentille photographique (2) sur un objet mobile particulier, sur la base des positions focalisées de la lentille et des instants, mémorisés dans ladite pluralité de moyens formant mémoire de positions focalisées;

lesdits moyens (12) formant mémoire du profil de déplacement de la lentille étant adaptés pour mémoriser lesdites données déterminées du profil de déplacement de la lentille.

**23.** Dispositif de mise au point automatique selon la revendication 22, comportant en outre :

des moyens sélecteurs de mode (17) pour sélectionner soit un mode de fonctionnement pour mémoriser, dans lesdits moyens (11-1 à 11-N) formant mémoires de positions focalisées, les différentes positions et instants de focalisation de la lentille, produits d'une manière séquentielle dans le temps, ou un mode de fonctionnement pour exécuter une commande d'entraînement de ladite lentille photographique (2) par lesdits moyens (7) formant dispositif de commande d'entraînement de la lentille, conformément auxdites données déterminées du profil de déplacement de la lentille.

**24.** Dispositif de mise au point automatique selon la revendication 22, comprenant en outre des moyens sélecteurs de mémoire (19) pour sélectionner l'un (11-n) de ladite pluralité de moyens (11-1 à 11-N) formant mémoires de positions de focalisation.

**25.** Dispositif de mise au point automatique selon la revendication 24, comprenant en outre des moyens d'affichage (21) pour afficher le contenu des moyens (11-n) formant mémoire de positions de focalisation, sélectionnés par lesdits moyens sélecteurs de mémoire (19).

**26.** Dispositif de mise au point automatique selon la revendication 22, comprenant en outre des moyens (8) formant dispositif de commande de mémoire pour commander la mémorisation ou la non mémorisation de la pluralité de positions focalisées et d'instants de focalisation de la lentille.

**27.** Dispositif de mise au point automatique selon la revendication 1, comprenant en outre des moyens (4) pour déterminer de façon répétée une position actuelle focalisée de la lentille, lesdits moyens de commande (7) étant adaptés pour commander la position de la lentille en fonction desdites données prédéterminées de déplacement de la lentille et de la position focalisée actuelle déterminée de la lentille.

**28.** Dispositif de mise au point automatique selon la revendication 1, comprenant en outre :

une lentille photographique (2) pour former une image d'un objet dans un plan prédéterminé;

des moyens de détection de mise au point (3) pour détecter un écart de mise au point d'un plan image de ladite lentille photographique par rapport audit plan prédéterminé;

lesdits moyens (12) formant mémoire de profils de déplacement de la lentille servant à mémoriser, en tant que données du profil de déplacement de la lentille, la relation entre la position de la lentille et le temps pour la focalisation de ladite lentille photographique sur un objet mobile particulier; et

des moyens (13) pour modifier la relation entre la position de la lentille et le temps, ladite relation étant mémorisée en tant que données de données de déplacement de la lentille, sur la base de l'écart de mise au point détecté par lesdits moyens de détection de mise au point (3), alors que ladite lentille photographique est déplacée par lesdits moyens de commande (7);

lesdits moyens de commande (7) étant adaptés pour commander la position de la lentille sur la base des données modifiées du profil de déplacement de la lentille.

## FIG. 1

## FIG. 2

# FIG. 3

# FIG. 4

EP 0 404 523 B1

# FIG. 5

Block diagram showing: OBJECT (1) → TAKING LENS (2) → FOCUS DETECTOR (3) → (DEFOCUS AMOUNT) → IN-FOCUS LENS POSITION DETERMINATION MEANS (4) → (IN-FOCUS LENS ABSOLUTE POSITION) → LENS DRIVE CONTROLLER (7). LENS MOVING PATTERN MEMORY (6) → (LENS MOVING PATTERN INFORMATION) → LENS DRIVE CONTROLLER (7). LENS POSITION DETECTOR (5) → (PRESENT LENS ABSOLUTE POSITION). LENS DRIVE CONTROLLER (7) feeds back to TAKING LENS (2).

# FIG. 6

| ADDRESS | ( TIME t ) | CONTENT (LENS POSITION) |
|---|---|---|
| X | 0 | Z0 |
| X + 1 | $1 \times \Delta T$ | Z1 |
| X + 2 | $2 \times \Delta T$ | Z2 |
| . . . | . . . | . . . |
| X + n | $n \times \Delta T$ | Zn |
| X + n + 1 | $( n + 1 ) \times \Delta T$ | Zn + 1 |
| . . . | . . . | . . . |

## FIG. 7A

## FIG. 7B

EP 0 404 523 B1

FIG. 8A

FIG. 8B

32

FIG. 9

EP 0 404 523 B1

# FIG. 10

```
┌────────────────────────────────────────┐ ⟋S1
│ GENERATE INTERRUPT FROM FOCUS          │
│ DETECTOR                               │
└────────────────────────────────────────┘
                   │
                   ▼
┌────────────────────────────────────────┐ ⟋S2
│ DETERMINE A IN-FOCUS LENS POSITION     │
│ ON THE BASIS OF A DEFOCUS AMOUNT       │
│ DETECTED BY FOCUS DETECTOR AND A       │
│ LENS ABSOLUTE POSITION DETECTED        │
│ BY LENS POSITION DETECTOR              │
└────────────────────────────────────────┘
                   │
                   ▼
┌────────────────────────────────────────┐ ⟋S3
│ GENERATE INTERRUPT IN LENS DRIVE       │
│ CONTROLLER AND FEED IN-FOCUS LENS      │
│ POSITION                               │
└────────────────────────────────────────┘
```

# FIG. 11

```
┌────────────────────────────────────────┐ ⟋S4
│ GENERATE INTERRUPT FROM IN-FOCUS       │
│ LENS POSITION DETERMINATION MEANS      │
└────────────────────────────────────────┘
                   │
                   ▼
┌────────────────────────────────────────┐ ⟋S5
│ DETERMINE A POSITION OF A FUNCTION     │
│ AT THE PRESENT TIME BY COMPARING A     │
│ FUNCTION STORED IN LENS MOVING         │
│ PATTERN MEMORY WITH IN-FOCUS LENS      │
│ POSITION                               │
└────────────────────────────────────────┘
                   │
                   ▼
┌────────────────────────────────────────┐ ⟋S6
│ START CONTROLLING FOR DRIVING LENS     │
│ FROM THE POSITION OF THE FUNCTION      │
│ AT THE PRESENT TIME ACCORDING TO       │
│ THE FUNCTION STORED                    │
└────────────────────────────────────────┘
```

## FIG. 12

## FIG. 13

DEFOCUS AMOUNT

IN-FOCUS LENS ABSOLUTE POSITION

| 1 | 2 | 3 | 4 | 6 | 8 |

OBJECT → TAKING LENS → FOCUS DETECTOR → IN-FOCUS LENS POSITION DETERMINATION MEANS → LENS MOVING PATTERN MEMORY ← MEMORY CONTROLLER

LENS MOVING PATTERN INFORMATION

5 — LENS POSITION DETECTOR

7 — LENS DRIVE CONTROLLER

PRESENT LENS ABSOLUTE POSITION

EP 0 404 523 B1

36

# FIG. 14

LENS
POSITION Z

$Z_{(t_{n+1})}$

$Z_{(t_n)}$

L

0   $t_1$   $t_2$  ----
$\Delta t$
$t_n$   $t_{n+1}$

TIME t

# FIG. 16

LENS
POSITION Z

$Z_{(t_{n+1})}$   START
$Z_{(t_n)}$
Z0

0   $t_1$   $t_2$   $t_n$   $t_{n+1}$

TIME t

37

## FIG. 15

## FIG. 17

EP 0 404 523 B1

## FIG. 18

LENS POSITION Z

COMPENSATED LOCUS INFORMATION
$t = A \times G(z) + B$
OR
$Z = F(a \times t + b)$

LOCUS INFORMATION
$t = G(z)$
OR
$Z = F(t)$

$Z_n$, $Z_{n-1}$, $Z_{n-2}$, $Z_3$, $Z_2$, $Z_1$, $Z_0$

$t_0$, $t_1$, $t_2$, $t_3$, $t_{n-2}$, $t_{n-1}$, $t_n$  TIME $t$

## FIG. 20

LENS POSITION Z

LOCUS INFORMATION
$Z = F(t)$
OR
$t = G(z)$

$Z_{k+1}$, $Z_k$, $Z_{k-1}$

$t_{k-1}$, $t_k$, $t_{k+1}$  TIME $t$

## *FIG. 19A*

| ADDRESS | TIME t |
|---------|--------|
| Y | t0 |
| Y + 1 | t1 |
| Y + 2 | t2 |
| ⋮ | ⋮ |
| Y + n − 1 | tn − 1 |
| Y + n | tn |
| ⋮ | ⋮ |

## *FIG. 19B*

| ADDRESS | CONTENT LENS POSITION |
|---------|-----------------------|
| W | Z0 |
| W + 1 | Z1 |
| W + 2 | Z2 |
| ⋮ | ⋮ |
| W + n − 1 | Zn − 1 |
| W + n | Zn |
| ⋮ | ⋮ |

## *FIG. 21*

| ADDRESS | ( TIME t ) | CONTENT LENS POSITION |
|---------|------------|-----------------------|
| X | ( 0 ) | $F(0)$ |
| X + 1 | $(1 \times \Delta T)$ | $F(1 \times \Delta T)$ |
| X + 2 | $(2 \times \Delta T)$ | $F(2 \times \Delta T)$ |
| ⋮ | ⋮ | ⋮ |
| X + n | $(n \times \Delta T)$ | $F(n \times \Delta T)$ |
| X + n + 1 | $((n + 1) \times \Delta T)$ | $F((n + 1) \times \Delta T)$ |
| ⋮ | ⋮ | ⋮ |

## FIG. 22

| ADDRESS | (LENS POSITION Z) | CONTENT LENS POSITION |
|---|---|---|
| X | ( 0 ) | G ( 0 ) |
| X + 1 | ( 1×$\Delta$Z ) | G ( 1×$\Delta$Z ) |
| X + 2 | ( 2×$\Delta$Z ) | G ( 2×$\Delta$Z ) |
| $\vdots$ | $\vdots$ | $\vdots$ |
| X + n | ( n×$\Delta$Z ) | G ( n×$\Delta$Z ) |
| X + n + 1 | ((n + 1)×$\Delta$Z ) | G ((n + 1) ×$\Delta$Z ) |
| $\vdots$ | $\vdots$ | $\vdots$ |

## FIG. 23A

| ADDRESS | — TIME t |
|---|---|
| V | t0 |
| V + 1 | t1 |
| V + 2 | t2 |
| $\vdots$ | $\vdots$ |
| V + K − 1 | tk − 1 |
| V + K | tk |
| $\vdots$ | $\vdots$ |

## FIG. 23B

| ADDRESS | CONTENT LENS POSITION |
|---|---|
| U | Z0 |
| U + 1 | Z1 |
| U + 2 | Z2 |
| $\vdots$ | $\vdots$ |
| U + K − 1 | Zk − 1 |
| U + K | Zk |
| $\vdots$ | $\vdots$ |

## FIG. 24

LENS
POSITION Z

$Z_{j+1}$

$Z_i$

$Z_j$

$t_j$      $t_i$      $t_{j+1}$      TIME t

$G(\overset{"}{Z}_j)$      $G(\overset{"}{Z}_i)$      $G(\overset{"}{Z}_{j+1})$

## FIG. 28

LENS
POSITION Z

$Z_{r+1}$

$Z_x$

$Z_r$

$t_r$      $t_x'$      $t_{r+1}$      TIME t

EP 0 404 523 B1

FIG. 25

FIG. 26

FIG. 27

# FIG. 29

EP 0 404 523 B1

FIG. 30

EP 0 404 523 B1

FIG. 31C

FIG. 31B

FIG. 31A

FIG. 32C

FIG. 32B

FIG. 32A

# FIG. 33

DEFOCUS AMOUNT

OBJECT 1 → TAKING LENS 2 → FOCUS DETECTOR 3 → IN-FOCUS LENS POSITION DETERMINATION MEANS 4

TO A POINT

IN-FOCUS POSITION MEMORY 11-1

IN-FOCUS POSITION MEMORY 11-2

IN-FOCUS POSITION MEMORY 11-N

LOCUS CALCULATOR 16

LENS POSITION DETECTOR 5

PRESENT LENS ABSOLUTE POSITION

LENS DRIVE CONTROLLER 7

LOCUS MEMORY 12

FROM A POINT

DRIVE PERMITTER 18

MODE SELECTOR 17

EP 0 404 523 B1

EP 0 404 523 B1

# FIG. 34

# FIG. 35

# FIG. 36

FIG. 37

LENS POSITION Z

FIG. 38

LENS POSITION Z

51

FIG. 39

FIG. 40